# EUROPÄISCHE PATENTSCHRIFT

(11) **EP 4 119 451 B1**
(45) Veröffentlichungstag und Bekanntmachung des Hinweises auf die Patenterteilung: **15.01.2025**
(21) Anmeldenummer: 21186355.0
(22) Anmeldetag: 19.07.2021
(51) Int. Cl.: B65B 9/13, B65B 11/00, B65B 53/02, B65B 53/06

(54) **VERFAHREN ZUR SCHAFFUNG ZUMINDEST EINES FREIBEREICHS IN EINER AUS SCHRUMPFFOLIE BESTEHENDEN, VORZUGSWEISE ALS SCHRUMPFHAUBE AUSGEBILDETEN, UMMANTELUNG UND FORMVORRICHTUNG ZUR DURCHFÜHRUNG EINES VERFAHRENS ZUR SCHAFFUNG ZUMINDEST EINES FREIBEREICHS IN EINER AUS SCHRUMPFFOLIE BESTEHENDEN, VORZUGSWEISE ALS SCHRUMPFHAUBE AUSGEBILDETEN, UMMANTELUNG**
METHOD FOR CREATING AT LEAST ONE FREE AREA IN A CASING MADE OF SHRINK FOIL, PREFERABLY DESIGNED AS A SHRINK HOOD, AND FORMING DEVICE FOR CARRYING OUT A METHOD FOR CREATING AT LEAST ONE FREE AREA IN A CASING CONSISTING OF SHRINK FOIL, PREFERABLY DESIGNED AS A SHRINK HOOD
PROCÉDÉ DE CRÉATION D'AU MOINS UNE ZONE LIBRE DANS UNE ENVELOPPE COMPOSÉE D'UNE FEUILLE RÉTRACTABLE, DE PRÉFÉRENCE CONÇUE SOUS LA FORME DE CAPOT RÉTRACTABLE ET DISPOSITIF DE FORMAGE DESTINÉ À LA MISE EN UVRE D'UN PROCÉDÉ DE CRÉATION D'AU MOINS UNE ZONE LIBRE DANS UNE ENVELOPPE COMPOSÉE D'UNE FEUILLE RÉTRACTABLE, DE PRÉFÉRENCE CONÇUE SOUS LA FORME DE CAPOT RÉTRACTABLE

(30) Priorität: 16.07.2021 DE 202021103827 U
(43) Veröffentlichungstag der Anmeldung: 18.01.2023
(73) Patentinhaber: MSK - Verpackungs-Systeme GmbH, 47533 Kleve (DE)
(72) Erfinder:
(74) Vertreter: Dr. Stark & Partner Patentanwälte mbB

(56) Entgegenhaltungen:
- US-A- 5 042 235
- US-A- 5 502 947
- US-A1- 2020 331 649

## Beschreibung

Die Erfindung betrifft ein Verfahren zur Schaffung zumindest eines Freibereichs in einer aus Schrumpffolie bestehenden, vorzugsweise als Schrumpfhaube ausgebildeten, Ummantelung, welche einen auf einer Palette angeordneten Gutstapel sichert, wobei die Palette vier Außenkanten, nämlich zwei einander gegenüberliegende Stirnkanten und zwei einander gegenüberliegende Längskanten, eine oberseitige Auflagefläche für den Gutstapel sowie mehrere unterseitige und im Abstand zueinander unter Bildung von Fußfreiräumen angeordnete, eine unterseitige Standfläche bildende Standfüße aufweist, wobei die Palette im Bereich ihrer vier Ecken jeweils einen Standfuß aufweist und vorzugsweise auch zwischen zwei Standfüßen einer Außenkante, vorzugsweise jeder Außenkante, noch zumindest einen weiteren dazwischen angeordneten Standfuß aufweist, wobei jeder Fußfreiraum der Palette viereckig und mit unter anderem einem oberen außenseitigen Eckbereich ausgebildet ist, und wobei die Ummantelung zumindest teilweise die Standfläche der im Bereich der vier Au-ßenkanten der Palette angeordneten Standfüße untergreift und wobei zumindest ein Freibereich in einen Ummantelungsbereich, der zwischen zwei Standfüßen einer gemeinsamen Außenkante liegt, eingebracht wird.

Bei einer Euro-Palette sind insgesamt drei Reihen von je drei klotzartig ausgebildeten Standfüßen vorgesehen, wobei die drei Standfüße einer Reihe unterseitig durch ein Abstellbrett miteinander verbunden sind. Bei einer solchen Ausgestaltung untergreift die Ummantelung die Unterseite der beiden äußersten Abstellbretter. Die Auflagefläche der Palette besteht üblicherweise aus fünf Oberbrettern. Zwischen den Standfüßen und der Auflagefläche können auch noch Querbretter angeordnet sein.

Beim Unterschrumpfverfahren handelt es sich um ein Verfahren zur Ladungssicherung eines auf einer Palette angeordneten Gutstapels. Beim Schrumpfverfahren wird üblicherweise eine Schrumpfhaube eingesetzt, die von oben über den auf der Palette angeordneten Gutstapel gezogen und anschließend von oben nach unten oder von unten nach oben geschrumpft wird. Hierdurch wird der Gutstapel an den vier Seiten und der Oberseite umhüllt. In Verbindung mit einem Bodenblatt ist auch ein allseitiger Schutz des Gutstapels möglich. Im noch nicht geschrumpften Zustand weist die Schrumpfhaube eine größere Länge als der Gutstapel einschließlich der Palette auf, so dass im Falle eines Unterschrumpfes im noch nicht geschrumpften Zustand die Schrumpfhaube unterseitig gegenüber der Unterseite der Palette hervorsteht. Beim Unterschrumpf wird der unterseitig gegenüber der Unterseite der Palette hervorstehende Rand der Schrumpfhaube erwärmt und zieht sich infolgedessen unter die Palette. Hierdurch wird ein maximaler Schutz und eine bestmögliche Ladungsstabilität erzielt.

Für einen Transport mit Flurförderfahrzeugen, wie z. B. einem Gabelstapler, müssen zum Aufnehmen der Palette im unteren Bereich Freibereiche in die Ummantelung eingebracht werden. Üblicherweise sind die Freibereiche im Bereich der Stirnkante einer Palette vorgesehen, da ein Gabelstapler üblicherweise die Palette über eine der beiden Stirnkanten anhebt und später den Gutstapel mit einer der Stirnkanten zuerst in einem Hochregallager einlagert. Die Stirnkante einer Palette ist beim Verpacken üblicherweise orthogonal zur Transportrichtung ausgerichtet. Die Freibereiche werden üblicherweise durch Einstechen der Gabelspitzen in die Ummantelung erzielt. Als Nachteil erweist sich, dass die Fußfreiräume nicht vollständig frei von der Ummantelung sind.

Daher wird die Palette häufig nicht von automatisierten Hochregallagern angenommen, da die obligatorische Anlagenfähigkeitsprüfung der Fußfreiräume zwischen den Standfüßen negativ ausfällt. Auch wurde versucht, im Bereich der Seite der Palette, in die die Gabelspitzen eines Gabelstaplers eingeführt werden sollen, den vollständigen Unterschrumpf und auch Seitenschrumpf im Bereich der Palette zu entfernen. Damit sind zwar die Fußfreiräume vollständig frei, jedoch führt dies zu einer starken Beeinträchtigung der Ladungsstabilität. Aus der US 2020/0331649 A1 ist ein Verfahren zur Schaffung zumindest eines Freiraums in einer aus Schrumpffolie bestehenden Ummantelung bekannt.

Aufgabe der Erfindung ist es, die vorgenannten Nachteile zu vermeiden und ein Verfahren anzugeben, mit dem ein Fußfreiraum oder Fußfreiräume zwischen zwei Standfüßen einer gemeinsamen Außenkante einer Palette frei von der Ummantelung gemacht werden kann (können), ohne dass hierdurch die Ladungsstabilität und die Schutzwirkung der Ummantelung gemindert wird.

Die Aufgabe wird dadurch gelöst, dass in gegenüberliegenden Bereichen zweier einander gegenüberliegender Außenkanten der Palette, vorzugsweise der beiden gegenüberliegenden Stirnkanten der Palette, vorzugsweise gleichzeitig, jeweils ein Freibereich mit zwei länglich ausgebildeten Verlagerungselementen erzeugt wird, wobei die Verlagerungselemente zunächst unterhalb der unterseitigen Standflächen der Palette angeordnet sind und wobei jedes Verlagerungselement mit seinen beiden Enden über die jeweilige Außenkante der Palette vorsteht, wobei der Ummantelungsbereich zumindest in den gegenüberliegenden Bereichen, in den jeweils ein Freibereich mittels der zwei Verlagerungselemente erzeugt werden soll, erwärmt wird, wobei jedes der beiden Verlagerungselemente in Richtung des oberen außenseitigen Eckbereichs des jeweiligen Fußfreiraums nach oben verlagert wird und wobei der nach oben verlagerte Ummantelungsbereich in seiner aufwärts verlagerten Position durch Abkühlen in dieser nach oben verlagerten Position fixiert wird.

Durch das erfindungsgemäße Verfahren wird der Ummantelungsbereich durch die Nachobenverlagerung beider Verlagerungselemente um den Fußfreiraum in Form einer Wulst herumgelegt. Nach dem Abkühlen verfestigt sich die entlang der beiden Standfüße und der Auflagefläche der Palette verlaufende aus dem nach oben verlagerten Ummantelungsbereich gebildete Wulst. Hat sich der Ummantelungsbereich hinreichend abgekühlt, verbleibt dieser in dieser Position. Infolgedessen ist der betreffende Fußfreiraum vollständig frei von dem Ummantelungsbereich, da der Ummantelungsbereich um den betreffenden Fußfreiraum "herumgelegt" worden ist.

Der Fußfreiraum ist dadurch dauerhaft komplett frei. Sofern im nach oben verlagerten Zustand des Ummantelungsbereichs jedes Verlagerungselement sich im oberen außenseitigen Eckbereich des jeweiligen Fußfreiraums befindet, wird der Ummantelungsbereich etwas über die Unterseite der Auflagefläche angehoben. Durch das erfindungsgemäße Verfahren wird die Ummantelung nicht beschädigt. Nach dem Schrumpfen der vollständigen Ummantelung zieht sich die Ummantelung wegen ihrer freiwerdenden Rückstellkräfte zusammen und bewirkt damit eine gute Ladungssicherung durch die auf den Gutstapel wirkenden Quer- und Längskräfte.

Sofern beide Verlagerungselemente an ihren insgesamt vier Enden gleichzeitig in einem gleichen Maße angehoben werden, wird gleichzeitig in den gegenüberliegenden Bereichen der zwei einander gegenüberliegenden Außenkanten jeweils ein viereckiger Freibereich eingebracht. Es ist aber auch durchaus möglich, dass die Verlagerungselemente zeitversetzt angehoben werden. Selbstverständlich ist es auch möglich, dass das eine Ende eines Verlagerungselementes und das andere Ende dieses Verlagerungselementes zeitversetzt angehoben werden.

Mit dem erfindungsgemäßen Verfahren können insoweit Fußfreiräume zuverlässig freigestellt werden. Das erfindungsgemäße Verfahren kann einfach in den bisherigen Schrumpfprozess integriert werden und erlaubt die Herstellung einer dauerhaften Ummantelung. Das Verfahren kann für alle Palettentypen und -lagen, bei denen in dem Bereich, in denen die Freibereiche eingebracht werden sollen, die betreffenden Fußfreiräume kein unterseitiges Bodenbrett aufweisen, verwendet werden, wobei die Ladungsstabilität beliebig eingestellt werden kann.

Bei dem erfindungsgemäßen Verfahren wird zunächst der Ummantelungsbereich zumindest in den gegenüberliegenden Bereichen, in denen jeweils ein Freibereich mittels der zwei Verlagerungselemente erzeugt werden soll, erwärmt. Die sich unterhalb der Standfläche der Palette befindlichen Bereiche der erwärmten Ummantelung ziehen sich - mit Ausnahme in den Ummantelungsbereichen, in denen ein Freibereich eingebracht werden soll - unter die Standfläche und bilden später den Unterschrumpf. Damit untergreift nach Durchführung des Verpackungsprozesses die Ummantelung zumindest teilweise die Unterseite der im Bereich der vier Außenkanten der Palette angeordneten Standfüße. Die Ummantelung liegt nach Durchführung des Verfahrens an den beiden nach außen weisenden Außenflächen eines Standfußes und teilweise auch an der Innenseite des Standfußes an, die dem benachbarten Standfuß zugewandt ist. Durch den Unterschrumpf in Kombination mit der "Umschlingung" wird eine besonders hohe Ladungssicherung erzielt, da hohe Vertikalkräfte von der Ummantelung aufgenommen werden können.

Sofern ein Standfuß auf einem Bodenbrett angeordnet ist, wird unter der unterseitigen Standfläche des Standfußes die Unterseite des Bodenbrettes verstanden.

Ein Verlagerungselement kann beispielsweise als Stange, vorzugsweise mit einem geringen Durchmesser, ausgebildet sein. An einem der beiden Enden der Stange oder an beiden Enden kann beispielsweise jeweils ein Zylinder vorgesehen sein, so dass das Verlagerungselement nach oben verlagert werden kann. Damit beispielsweise auch bei nicht optimal ausgerichteten Paletten der betreffende Fußfreiraum zuverlässig freigestellt werden kann, kann jedes Verlagerungselement auch schräg nach oben in Richtung des oberen außenseitigen Eckbereichs des jeweiligen Fußfreiraums verlagert werden.

Dabei kann in den gegenüberliegenden Bereichen zweier einander gegenüberliegender Außenkanten der Palette jeweils ein Freibereich zwischen zwei unmittelbar benachbarten Standfüßen erzeugt werden, wobei die Abmessungen des Freibereichs den Abmessungen des Fußfreiraums zwischen diesen beiden unmittelbar benachbarten Standfüßen der betreffenden Außenkante entspricht.

Bei einer solchen Verfahrweise entspricht die Größe des erzeugten Freibereichs in dem Ummantelungsbereich der Größe des Fußfreiraums zwischen diesen beiden unmittelbar benachbarten Standfüßen.

Die Palette kann in zwei einander gegenüberliegenden Außenkanten zum einen im Bereich der Ecken jeweils einen Standfuß und zum anderen zusätzlich noch zumindest einen weiteren, dazwischen angeordneten Standfuß aufweisen, und ein Freibereich kann in den Ummantelungsbereich, der zwischen zwei nicht unmittelbar benachbarten Standfüßen einer gemeinsamen Außenkante liegt, eingebracht werden. Weist die Palette beispielsweise im Bereich ihrer Stirnkante drei in einer Reihe liegende Standfüße auf, wird das eine Verlagerungselement in Richtung des oberen außenseitigen Eckbereichs des ersten Fußfreiraums nach oben verlagert und das andere Verlagerungselement in Richtung des oberen außenseitigen Eckbereichs des zweiten Fußfreiraums nach oben verlagert. Damit erstreckt sich der erzeugte Freibereich im Ummantelungsbereich über beide Fußfreiräume und damit auch über den die beiden Fußfreiräume voneinander abtrennenden mittleren Standfuß. Weist die Palette beispielsweise fünf Standfüße in einer Reihe auf, so kann es sich bei den beiden Standfüßen auch um den zweiten und vierten Standfuß handeln. Bei einer solchen Ausgestaltung würde sich der erzeugte Freibereich im Ummantelungsbereich über den Fußfreiraum zwischen dem zweiten und dritten Standfuß, über den Fußfreiraum zwischen dem dritten und vierten Standfuß sowie über den die beiden Fußfreiräume voneinander abtrennenden mittleren (dritten) Standfuß erstrecken.

Als Verlagerungselement kann ein Seil oder ein Draht verwendet werden. Das Seil oder der Draht kann beispielsweise zwischen zwei Zylinder gespannt sein. Jeder Zylinder ist derart ausgerichtet und betätigbar, dass der gespannte Draht oder das gespannte Seil auch diagonal nach oben in Richtung des oberen außenseitigen Eckbereichs des jeweiligen Fußfreiraums verlagert werden kann. Durch die Ausgestaltung als Seil oder als Draht wird das entsprechende Verlagerungselement auch dann in den oberen außenseitigen Eckbereich des jeweiligen Fußfreiraums bei der Nachobenverlagerung bewegt, wenn die Palette beispielsweise nicht optimal ausgerichtet ist oder aber die Abmessungen der Fußfreiräume variieren.

Zumindest ein Verlagerungselement kann während der Verlagerung in Richtung des oberen außenseitigen Eckbereichs des jeweiligen Fußfreiraums und/oder nach Abschluss der Verlagerung in Richtung des oberen außenseitigen Eckbereichs des jeweiligen Fußfreiraums translatorisch verlagert werden. Unter einer translatorischen Bewegung wird eine geradlinige Bewegung jedes Verlagerungselementes verstanden. Dabei ist die Bewegung orthogonal bzw. zumindest in etwa orthogonal zu den einander gegenüberliegenden Außenkanten der Palette, im Bereich derer die Freibereiche in die Ummantelung eingebracht werden sollen, ausgerichtet. Durch diese Hin- und Herbewegung wird erreicht, dass im nach oben verlagerten Zustand des Ummantelungsbereichs die beiden oberen außenseitigen Eckbereiche frei von Folie sind. Dies ist darin begründet, dass jedes Verlagerungselement in den oberen außenseitigen Eckbereich des jeweiligen Fußfreiraums nach oben verlagert wird und damit der Ummantelungsbereich etwas über die Unterseite der Auflagefläche hinaus angehoben wird. Durch die translatorische Bewegung wird eine Art Sägebewegung erzeugt, durch die der Ummantelungsbereich von unterhalb der Palette vor die Stirnseite der Palette gefördert wird. Durch diese Bewegung bildet sich eine besonders formstabile Folienwulst und der Fußfreiraum ist vollständig frei von der Ummantelung.

Zumindest ein Verlagerungselement kann aus zwei durch eine Feder, vorzugsweise eine Zugfeder, miteinander verbundenen Teilbereichen bestehen, wobei die beiden Teilbereiche getrennt translatorisch, vorzugsweise in jeweils entgegengesetzte Richtungen, verlagert werden. Eine solche Ausgestaltung erlaubt, dass die beiden Teilbereiche eines Verlagerungselementes jeweils voneinander weg oder aufeinander zu bewegt werden können. Auf diese Weise werden die Ummantelungsbereiche im Bereich der einander gegenüberliegenden Seiten entweder beide von der Palette weggezogen oder beide zu der Palette hinbewegt.

Zumindest ein Verlagerungselement kann zumindest in jedem seiner beiden Bereiche, die mit dem Ummantelungsbereich in Kontakt sind, eine raue Oberfläche aufweisen und/oder, vorzugsweise zackenförmig ausgebildete, Erhebungen aufweisen. Vorzugsweise sind die Erhebungen nach Art eines Zahnprofils, wie beispielsweise nach Art eines Sägeblattes, ausgebildet. Sofern ein Verlagerungselement aus zwei Bereichen besteht, bietet sich an, dass jede Erhebung zumindest eines Verlagerungselementes als Zahn ausgebildet ist, wobei jeder Zahn eine flacher angestellte Vorderkante und eine steiler angestellte Rückkante aufweist, wobei alle Zähne eines jeden Teilbereichs eine einheitliche Ausrichtung aufweisen und wobei die Vorderkanten der Zähne des einen Teilbereichs dem gegenüberliegenden Teilbereich zugewandt sind. Bei einer solchen Ausrichtung der Zähne wird der jeweilige Ummantelungsbereich bei Wegziehen des entsprechenden Teilbereichs von der Palette besser nach au-ßen gezogen, was die Nachobenverlagerung des Ummantelungsbereichs vereinfacht. Durch die raue Oberfläche und/oder die Erhebungen wird insoweit insbesondere das Herausfördern des durch die Nachobenverlagerung geklemmten Ummantelungsbereichs aus dem betreffenden Fußfreiraum der Palette erzielt, so dass die später bildende Folienwulst um den Fußfreiraum herumgelegt ist und sich insoweit an der Außenkante (Außenseite) der Palette befindet.

Dabei kann der Ummantelungsbereich, vorzugsweise bevor der Ummantelungsbereich zumindest in den gegenüberliegenden Bereichen, in den jeweils ein Freibereich mittels der zwei Verlagerungselemente erzeugt werden soll, erwärmt wird, seitlich gegen die Palette verlagert, vorzugsweise gesaugt, werden. Hierzu kann beispielsweise in dem Förderer ein Ventilator angeordnet sein, der Luft nach unten aus dem durch die Ummantelung umfassten Raum absaugt und dabei den unteren Ummantelungsbereich seitlich gegen die Palette zieht. Bei Änderung der Drehrichtung kann Luft auch nach oben, d. h. in den durch die Ummantelung umfassten Raum, eingeblasen werden.

Der Ummantelungsbereich kann zumindest in einem der beiden Bereiche, vorzugsweise in beiden Bereichen, in dem (denen) jeweils ein Freibereich mittels der zwei Verlagerungselemente erzeugt werden soll, erst dann nach oben verlagert werden, wenn das Erwärmen in dem betreffenden Bereich vollständig abgeschlossen ist.

Dabei kann die Ummantelung zumindest in einem der beiden Bereiche, vorzugsweise in beiden Bereichen, in dem (denen) jeweils ein Freibereich mittels der zwei Verlagerungselemente erzeugt werden soll, vor dem Erwärmen und/oder während des Erwärmens und/oder vor einem eventuellen seitlichen, d. h. horizontalen, Verlagern des Ummantelungsbereichs gegen die Palette, vorzugsweise durch Ansaugen, von der Palette und/oder von dem auf der Palette angeordneten Gutstapel in horizontaler Richtung gesehen beabstandet werden. Damit wird verhindert, dass der erwärmte Ummantelungsbereich mit dem Gutstapel und der Palette in dem zu verlagernden Bereich in Kontakt ist.

Die Ummantelung kann, vorzugsweise vor dem Erwärmen, und/oder vorzugsweise während des Erwärmens, und/oder vorzugsweise während der Verlagerung zumindest eines Verlagerungselementes in Richtung des oberen außenseitigen Eckbereichs des jeweiligen Fußfreiraums in dem Bereich, der sich oberhalb des bereits erwärmten bzw. zu erwärmenden Ummantelungsbereichs befindet, gegenüber der Auflagefläche der Palette fixiert werden. Hierdurch wird einer unerwünschten Halbmondbildung im Freibereich entgegengewirkt. Eine Halbmondbildung entsteht durch die in Folge der Erwärmung in dem Ummantelungsbereich freiwerdenden Rückstellkräfte.

Dabei kann die Ummantelung während der Nachobenverlagerung jedes Ummantelungsbereichs im Bereich der beiden einander gegenüberliegenden Au-ßenkanten die Ummantelung oder nach Abschluss der Nachobenverlagerung jedes Ummantelungsbereichs im Bereich der beiden einander gegenüberliegenden Außenkanten zumindest in dem mit den vier Außenkanten der Palette in Kontakt befindlichen Bereichen, vorzugsweise vollständig, geschrumpft oder ausgeschrumpft werden. Sofern die Ummantelung dann vollständig geschrumpft worden ist, ist der Verpackungsprozess abgeschlossen.

Es bietet sich an, wenn der vollständige Bereich der Ummantelung, der sich unterhalb der Auflagefläche der Palette befindet, erwärmt wird, bevor jedes der beiden Verlagerungselemente in Richtung des oberen außenseitigen Eckbereichs des jeweiligen Fußfreiraums nach oben verlagert wird.

Gegenstand der Erfindung ist auch eine Formvorrichtung zur Durchführung eines Verfahrens zur Schaffung zumindest eines Freibereichs in einer aus Schrumpffolie bestehenden, vorzugsweise als Schrumpfhaube ausgebildeten, Ummantelung, welche einen auf einer Palette angeordneten Gutstapel sichert, wobei die Palette vier Außenkanten, nämlich zwei einander gegenüberliegende Stirnkanten und zwei einander gegenüberliegende Längskanten, eine oberseitige Auflagefläche für den Gutstapel sowie mehrere unterseitige und im Abstand zueinander unter Bildung von Fußfreiräumen angeordnete, eine unterseitige Standfläche bildende Standfüße aufweist, wobei die Palette im Bereich ihrer vier Ecken jeweils einen Standfuß aufweist und vorzugsweise auch zwischen zwei Standfüßen einer Außenkante, vorzugsweise jeder Außenkante, noch zumindest einen weiteren dazwischen angeordneten Standfuß aufweist, wobei jeder Fußfreiraum der Palette viereckig und mit unter anderem einem oberen außenseitigen Eckbereich ausgebildet ist, und wobei die Ummantelung zumindest teilweise die Standfläche der im Bereich der vier Außenkanten der Palette angeordneten Standfüße untergreift und wobei zumindest ein Freibereich in einen Ummantelungsbereich, der zwischen zwei Standfüßen einer gemeinsamen Außenkante liegt, eingebracht wird.

Bei einer Euro-Palette sind insgesamt drei Reihen von je drei klotzartig ausgebildeten Standfüßen vorgesehen, wobei die drei Standfüße einer Reihe unterseitig durch ein Abstellbrett miteinander verbunden sind. Bei einer solchen Ausgestaltung untergreift die Ummantelung die Unterseite der beiden äußersten Abstellbretter. Die Auflagefläche der Palette besteht üblicherweise aus fünf Oberbrettern. Zwischen den Standfüßen und der Auflagefläche können auch noch Querbretter angeordnet sein.

Beim Unterschrumpfverfahren handelt es sich um ein Verfahren zur Ladungssicherung eines auf einer Palette angeordneten Gutstapels. Beim Schrumpfverfahren wird üblicherweise eine Schrumpfhaube eingesetzt, die von oben über den auf der Palette angeordneten Gutstapel gezogen und anschließend von oben nach unten oder von unten nach oben geschrumpft wird. Hierdurch wird der Gutstapel an den vier Seiten und der Oberseite umhüllt. In Verbindung mit einem Bodenblatt ist auch ein allseitiger Schutz des Gutstapels möglich. Im noch nicht geschrumpften Zustand weist die Schrumpfhaube eine größere Länge als der Gutstapel einschließlich der Palette auf, so dass im Falle eines Unterschrumpfes im noch nicht geschrumpften Zustand die Schrumpfhaube unterseitig gegenüber der Unterseite der Palette hervorsteht. Beim Unterschrumpf wird der unterseitig gegenüber der Unterseite der Palette hervorstehende Rand der Schrumpfhaube erwärmt und zieht sich infolgedessen unter die Palette. Hierdurch wird ein maximaler Schutz und eine bestmögliche Ladungsstabilität erzielt.

Für einen Transport mit Flurförderfahrzeugen, wie z. B. einem Gabelstapler, müssen zum Aufnehmen der Palette im unteren Bereich Freibereiche in die Ummantelung eingebracht werden. Üblicherweise sind die Freibereiche im Bereich der Stirnkante einer Palette vorgesehen, da ein Gabelstapler üblicherweise die Palette über eine der beiden Stirnkanten anhebt und später den Gutstapel mit einer der Stirnkanten zuerst in einem Hochregallager einlagert. Die Stirnkante einer Palette ist beim Verpacken üblicherweise orthogonal zur Transportrichtung ausgerichtet. Die Freibereiche werden üblicherweise durch Einstechen der Gabelspitzen in die Ummantelung erzielt. Als Nachteil erweist sich, dass die Fußfreiräume nicht vollständig frei von der Ummantelung sind. Daher wird die Palette häufig nicht von automatisierten Hochregallagern angenommen, da die obligatorische Anlagenfähigkeitsprüfung der Fußfreiräume zwischen den Standfüßen negativ ausfällt. Auch wurde versucht, im Bereich der Seite der Palette, in die die Gabelspitzen eines Gabelstaplers eingeführt werden sollen, den vollständigen Unterschrumpf und auch Seitenschrumpf im Bereich der Palette zu entfernen. Damit sind zwar die Fußfreiräume vollständig frei, jedoch führt dies zu einer starken Beeinträchtigung der Ladungsstabilität.

Aufgabe der Erfindung ist es, die vorgenannten Nachteile zu vermeiden und eine Formvorrichtung anzugeben, mit der ein Fußfreiraum oder Fußfreiräume zwischen zwei Standfüßen einer gemeinsamen Außenkante einer Palette frei von der Ummantelung gemacht werden kann (können), ohne dass hierdurch die Ladungsstabilität und die Schutzwirkung der Ummantelung gemindert wird.

Die Aufgabe wird dadurch gelöst, dass zumindest zwei länglich ausgebildete Verlagerungselemente vorgesehen sind, wobei jedes der beiden Verlagerungselemente zunächst unterhalb der unterseitigen Standfläche der Palette angeordnet ist und wobei jedes Verlagerungselement mit seinen beiden Enden über die jeweilige Außenkante der Palette vorsteht, und wobei jedem der beiden Verlagerungselemente zumindest jeweils eine Verlagerungseinrichtung zugeordnet ist, mittels der das betreffende Verlagerungselement zum nach oben Verlagern des Ummantelungsbereichs in Richtung des oberen außenseitigen Eckbereichs des jeweiligen Fußfreiraums nach oben verlagerbar ist. Damit erstreckt sich jedes Verlagerungselement über die komplette Länge bzw. über die komplette Breite der Palette.

Mittels der erfindungsgemäßen Formvorrichtung wird der Ummantelungsbereich durch die Nachobenverlagerung beider Verlagerungselemente um den Fußfreiraum in Form einer Wulst herumgelegt. Nach dem Abkühlen verfestigt sich die entlang der beiden Standfüße und der Auflagefläche der Palette verlaufende aus dem nach oben verlagerten Ummantelungsbereich gebildete Wulst. Hat sich der Ummantelungsbereich hinreichend abgekühlt, verbleibt dieser in dieser Position. Infolgedessen ist der betreffende Fußfreiraum vollständig frei von dem Ummantelungsbereich, da der Ummantelungsbereich um den betreffenden Fußfreiraum "herumgelegt" worden ist.

Der Fußfreiraum ist dadurch dauerhaft komplett frei. Sofern im nach oben verlagerten Zustand des Ummantelungsbereichs jedes Verlagerungselement sich im oberen außenseitigen Eckbereich des jeweiligen Fußfreiraums befindet, wird der Ummantelungsbereich etwas über die Unterseite der Auflagefläche angehoben. Die Ummantelung wird bei Verwendung der erfindungsgemäßen Formvorrichtung nicht beschädigt. Nach dem Schrumpfen der vollständigen Ummantelung zieht sich die Ummantelung wegen ihrer freiwerdenden Rückstellkräfte zusammen und bewirkt damit eine gute Ladungssicherung durch die auf den Gutstapel wirkenden Quer- und Längskräfte.

Sofern beide Verlagerungselemente an ihren insgesamt vier Enden gleichzeitig in einem gleichen Maße angehoben werden, wird gleichzeitig in den gegenüberliegenden Bereichen der zwei einander gegenüberliegenden Außenkanten jeweils ein viereckiger Freibereich eingebracht. Es ist aber auch durchaus möglich, dass die Verlagerungselemente zeitversetzt angehoben werden. Selbstverständlich ist es auch möglich, dass das eine Ende eines Verlagerungselementes und das andere Ende dieses Verlagerungselementes zeitversetzt angehoben werden.

Bei dem Verfahren wird zunächst der Ummantelungsbereich zumindest in den gegenüberliegenden Bereichen, in den jeweils ein Freibereich mittels der zwei Verlagerungselemente erzeugt werden soll, erwärmt. Die sich unterhalb der Standfläche der Palette befindlichen Bereiche der erwärmten Ummantelung ziehen sich - mit Ausnahme in den Ummantelungsbereichen, in denen ein Freibereich eingebracht werden soll - unter die Standfläche und bilden später den Unterschrumpf. Damit untergreift nach Durchführung des Verpackungsprozesses die Ummantelung zumindest teilweise die Unterseite der im Bereich der vier Außenkanten der Palette angeordneten Standfüße. Die Ummantelung liegt nach Durchführung des Verfahrens an den beiden nach außen weisenden Außenflächen eines Standfußes und teilweise auch an der Innenseite des Standfußes an, die dem benachbarten Standfuß zugewandt ist. Durch den Unterschrumpf in Kombination mit der "Umschlingung" wird eine besonders hohe Ladungssicherung erzielt, da hohe Vertikalkräfte von der Ummantelung aufgenommen werden können.

Sofern ein Standfuß auf einem Bodenbrett angeordnet ist, wird unter der unterseitigen Standfläche des Standfußes die Unterseite des Bodenbrettes verstanden.

Mit der erfindungsgemäßen Formvorrichtung können insoweit Fußfreiräume zuverlässig freigestellt werden. Die erfindungsgemäße Formvorrichtung kann einfach in den bisherigen Schrumpfprozess integriert werden und erlaubt die Herstellung einer dauerhaften Ummantelung. Auch kann die erfindungsgemäße Formvorrichtung einfach in eine übliche Schrumpfanlage mit einem Förderer eingebaut werden. Die erfindungsgemäße Formvorrichtung stellt eine Erweiterung von bekannten Schrumpfsystemen für Vollpaletten um das automatisierte Freiformen eines Fußfreiraums bzw. von Fußfreiräumen einer Palette zur Sicherstellung der Anlagenfähigkeit für automatisierte Lagereinrichtungen, insbesondere Hochregallager, dar. Die Formvorrichtung kann in eine Schrumpfanlage integriert sein.

Ein Verlagerungselement kann beispielsweise als Stange, vorzugsweise mit einem geringen Durchmesser, ausgebildet sein. An einem der beiden Enden der Stange oder an beiden Enden kann beispielsweise jeweils ein Zylinder vorgesehen sein, so dass das Verlagerungselement nach oben verlagert werden kann. Damit beispielsweise auch bei nicht optimal ausgerichteten Paletten der betreffende Fußfreiraum zuverlässig freigestellt werden kann, ist jedes Verlagerungselement auch schräg nach oben in Richtung des oberen außenseitigen Eckbereichs des jeweiligen Fußfreiraums verlagerbar.

Zumindest ein Verlagerungselement kann beispielsweise als Stange ausgebildet sein, die zunächst unterhalb der Standfläche der Palette geführt ist. Bei Ausbildung des Verlagerungselementes als Stange kann beispielsweise an einem Ende der Stange als Verlagerungseinrichtung ein Zylinder angreifen, der die Stange nach oben verlagert. Die Nachobenverlagerung in Richtung des oberen außenseitigen Eckbereichs des jeweiligen Fußfreiraums kann auch diagonal ausgestaltet sein.

Die Verlagerungseinrichtungen können beispielsweise zwischen den Förderketten eines Förderers installiert sein. Der Förderer dient dem An- und Abtransport der Paletten und dem darauf befindlichen Gutstapel. Werden die Verlagerungselemente nicht benötigt, sind die Zylinder eingefahren und ragen nicht oberseitig aus dem Förderer hinaus. Auf diese Weise kann eine Palette problemlos an- und abtransportiert werden. Soll hingegen ein Freibereich in einem Ummantelungsbereich geschaffen werden, fahren die Zylinder aus, sodass auf diese Weise das betreffende Verlagerungselement in den oberen außenseitigen Eckbereich des jeweiligen Fußfreiraums verlagert wird.

Zumindest ein Verlagerungselement kann als Seil oder als Draht ausgebildet sein. Ein Seil oder ein Draht bietet den Vorteil, dass der obere außenseitige Eckbereich des jeweiligen Fußfreiraums nicht genau "angezielt" werden muss. So wird das Seil oder der Draht bei diagonaler Verlagerung nach oben bei Kontakt mit der Unterseite der Auflagefläche in den betreffenden Eckbereich gezogen. Das Seil oder der Draht kann beispielsweise zwischen zwei jeweils als Verlagerungseinrichtung ausgebildete Zylinder gespannt sein.

Zumindest einem Verlagerungselement können zwei Verlagerungseinrichtungen zugeordnet sein. Die Verlagerungseinrichtungen sind vorzugsweise an den beiden Enden des Verlagerungselementes angeordnet. Die Verlagerungseinrichtungen eines Verlagerungselementes können synchron oder auch getrennt voneinander, d. h. zeitversetzt und/oder in abweichenden Geschwindigkeiten, verlagerbar sein.

Zumindest eine Verlagerungseinrichtung kann als Zylinder ausgebildet sein. Jeder Zylinder ist derart ausgerichtet und betätigbar, dass beispielsweise der gespannte Draht oder das gespannte Seil auch diagonal nach oben in Richtung des oberen außenseitigen Eckbereichs des jeweiligen Fußfreiraums verlagert werden kann. Durch die Ausgestaltung als Seil oder als Draht wird das entsprechende Verlagerungselement auch dann in den oberen außenseitigen Eckbereich des jeweiligen Fußfreiraums bei der Nachobenverlagerung bewegt, wenn die Palette beispielsweise nicht optimal ausgerichtet ist oder aber die Abmessungen der Fußfreiräume variieren.

Zumindest eine der beiden Verlagerungseinrichtungen, vorzugsweise beide Verlagerungseinrichtungen, eines Verlagerungselementes können parallel zur Längserstreckung des jeweiligen Verlagerungselementes gesehen verfahrbar angeordnet sein. Damit kann das entsprechende Verlagerungselement beispielsweise gegenüber der Palette verfahren werden.

Zumindest ein Verlagerungselement kann translatorisch verlagerbar sein. Unter einer translatorischen Bewegung wird eine geradlinige Bewegung jedes Verlagerungselementes verstanden. Dabei ist die Bewegung orthogonal bzw. zumindest in etwa orthogonal zu den einander gegenüberliegenden Außenkanten der Palette, im Bereich derer die Freibereiche in die Ummantelung eingebracht werden sollen, ausgerichtet. Durch diese Hin- und Herbewegung wird erreicht, dass im nach oben verlagerten Zustand des Ummantelungsbereichs die beiden oberen außenseitigen Eckbereiche frei von Folie sind. Dies ist darin begründet, dass jedes Verlagerungselement in den oberen außenseitigen Eckbereich des jeweiligen Fußfreiraums nach oben verlagert wird und damit der Ummantelungsbereich etwas über die Unterseite der Auflagefläche hinaus angehoben wird. So kann beispielsweise ein Verlagerungselement als um zwei gegenüberliegende Rollen geführtes Endlosseil ausgebildet sein, das um die Rollen in eine Rotation versetzt werden kann. Durch die translatorische Bewegung wird eine Art Sägebewegung erzeugt, durch die der Ummantelungsbereich von unterhalb der Palette vor die Stirnseite der Palette gefördert wird. Durch diese Bewegung bildet sich eine besonders formstabile Folienwulst und der Fußfreiraum ist vollständig frei von der Ummantelung.

Zumindest ein Verlagerungselement kann aus zwei durch eine Feder, vorzugsweise eine Zugfeder, miteinander verbundenen Teilbereichen bestehen, wobei die beiden Teilbereiche getrennt translatorisch, vorzugsweise in jeweils entgegengesetzte Richtungen, verlagerbar sind. Eine solche Ausgestaltung erlaubt, dass die beiden Teilbereiche eines Verlagerungselementes jeweils voneinander weg oder aufeinander zu bewegt werden können. Auf diese Weise werden die Ummantelungsbereiche im Bereich der einander gegenüberliegenden Seiten entweder beide von der Palette weggezogen oder beide zu der Palette hinbewegt.

Zumindest ein Verlagerungselement kann in jedem seiner beiden Bereiche, die mit jeweils einem Ummantelungsbereich in Kontakt sind, eine raue Oberfläche aufweisen. Durch die raue Oberfläche wird insoweit insbesondere das Herausfördern des durch die Nachobenverlagerung geklemmten Ummantelungsbereichs aus dem betreffenden Fußfreiraum der Palette erzielt, so dass die später bildende Folienwulst um den Fußfreiraum herumgelegt ist und sich insoweit an der Außenkante (Außenseite) der Palette befindet.

Zumindest ein Verlagerungselement kann in jedem seiner beiden Bereiche, die mit jeweils einem Ummantelungsbereich in Kontakt sind, eine Hülse mit einer rauen Oberfläche und/oder mit, vorzugsweise zackenförmig ausgebildeten, Erhebungen aufweisen. Auch durch die Erhebungen wird insoweit insbesondere das Herausfördern des durch die Nachobenverlagerung geklemmten Ummantelungsbereichs aus dem betreffenden Fußfreiraum der Palette erzielt, so dass die später bildende Folienwulst um den Fußfreiraum herumgelegt ist und sich insoweit an der Außenkante (Außenseite) der Palette befindet.

Es bietet sich an, wenn jede Erhebung zumindest eines Verlagerungselementes als Zahn ausgebildet ist, der eine flacher angestellte Vorderkante und eine stärker angestellte Rückkante aufweist, wobei alle Zähne eines Teilbereichs eine einheitliche Ausrichtung aufweisen und wobei die Vorderkanten der Zähne des einen Teilbereichs dem gegenüberliegenden Teilbereich zugewandt sind. Bei einer solchen Ausrichtung der Zähne wird der jeweilige Ummantelungsbereich bei Wegziehen des entsprechenden Teilbereichs von der Palette besser nach außen gezogen, was die Nachobenverlagerung des Ummantelungsbereichs vereinfacht.

Im Folgenden werden in den Zeichnungen dargestellte Ausführungsbeispiele der Erfindung erläutert. Es zeigen:
- Fig. 1: eine Seitensicht auf die Längskante einer angehobenen Palette mit einem darauf angeordneten Gutstapel,
- Fig. 2: den Gegenstand von Fig. 1 aus der Blickrichtung auf die Stirnkante,
- Fig. 3: den Gegenstand nach Fig. 1 nach Absetzen der Palette auf den Förderer,

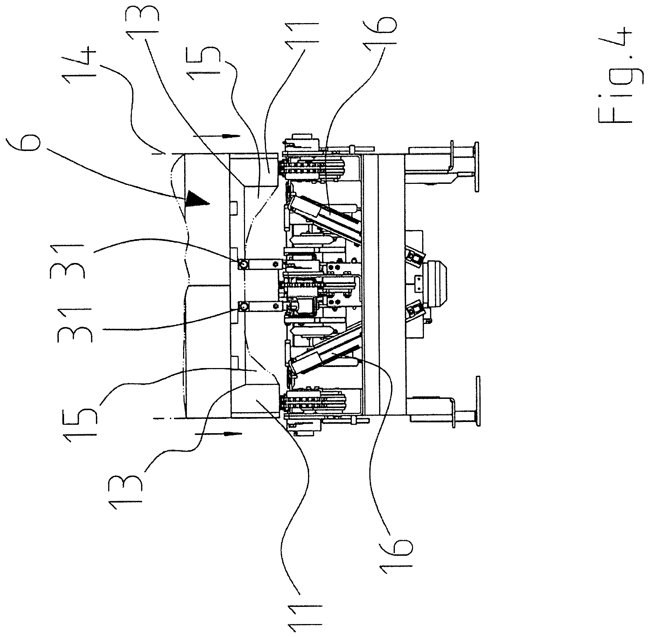

- Fig. 4: den Gegenstand von Fig. 3 aus der Blickrichtung auf die Stirnkante,
- Fig. 5: den Gegenstand nach Fig. 3, wobei die Verlagerungselemente nach oben verlagert werden,
- Fig. 6: den Gegenstand von Fig. 5 aus der Blickrichtung auf die Stirnkante,
- Fig. 7: den Gegenstand nach Fig. 5, wobei die Verlagerungselemente translatorisch bewegt werden,
- Fig. 8: die Stirnkante der Palette, wobei der Freibereich schon erzeugt worden ist,
- Fig. 9: eine schräge Ansicht auf den Gegenstand nach Fig. 8,
- Fig. 10: den Verfahrensschritt, in dem das Verlagerungselement durch Absenken wieder nach unten in den Förderer zurückverlagert wird,
- Fig. 11: der fertig umhüllte Gutstapel mit Palette, wobei in die Ummantelung bereits ein Freibereich eingebracht worden ist,
- Fig. 12: ein Verlagerungselement in Alleinstellung,
- Fig. 13: das Detail "X" aus Fig. 12,

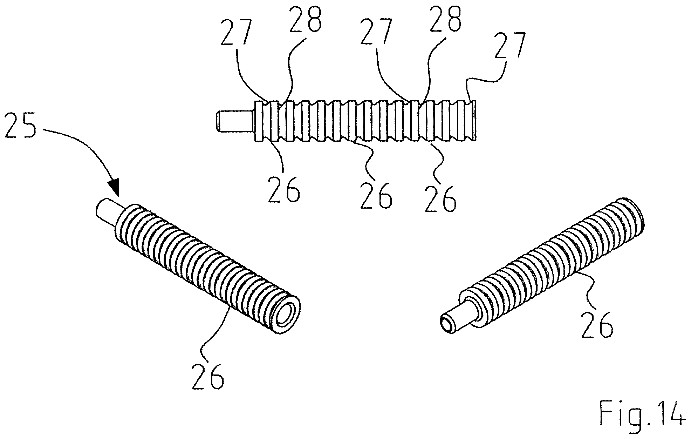

- Fig. 14: unterschiedliche Ansichten einer Hülse,
- Fig. 15 + 16: einen Abstreifer in zwei unterschiedlichen Positionen und
- Fig. 17: ein Detail eines nach der Erfindung verpackten Gutstapels mit Unterschrumpf.

In allen Figuren werden für gleiche bzw. gleichartige Bauteile übereinstimmende Bezugszeichen verwendet.

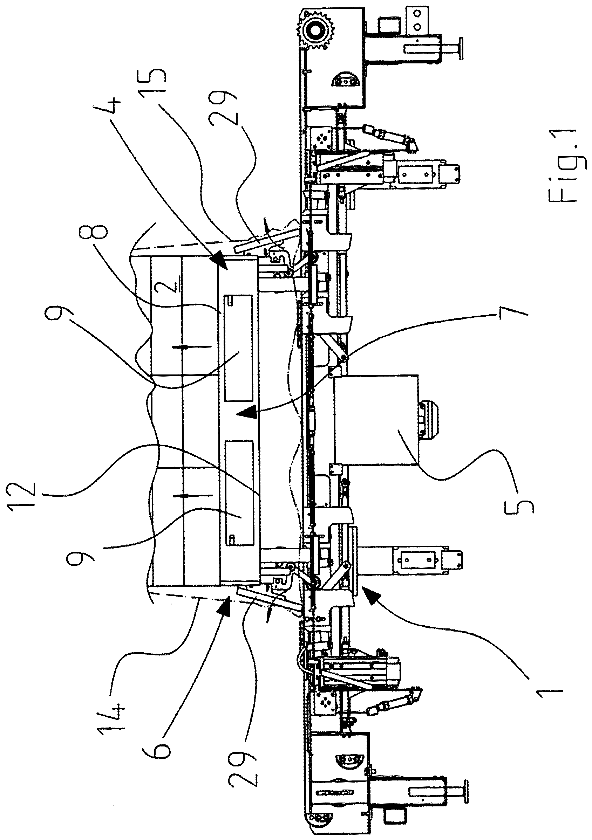

In Fig. 1 ist ein Förderer 1 in der Seitenansicht dargestellt, der dem Antransport eines noch zu verpackenden Gutstapels 2 und dem Abtransport eines verpackten Gutstapels 2 dient. Ein Teilbereich des Förderers 1 ist als Schrumpfbereich ausgebildet. Der Förderer 1 umfasst diverse Bauteile und Komponenten, die in den Figuren angedeutet sind, jedoch nachfolgend nicht näher erläutert werden, sofern sie für das erfindungsmäße Verfahren nicht von Relevanz sind.

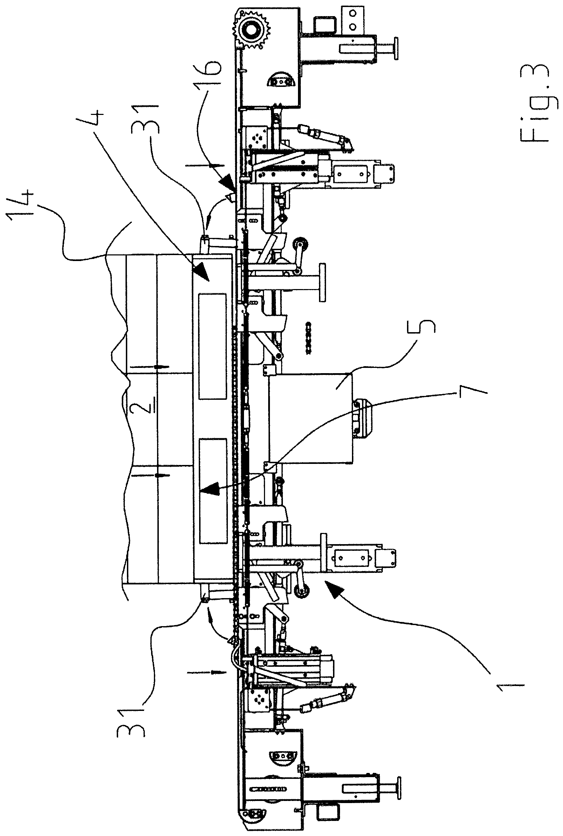

Im Schrumpfbereich weist der Förderer 1 vier Hubstempel 3 auf, mittels denen eine Palette 4 mit einem darauf angeordneten Gutstapel 2 in eine angehobene Position, so wie sie in Fig. 1 dargestellt ist, verlagert werden kann. Beispielsweise in Fig. 3 ist die Palette 4 in der nicht angehobenen Position dargestellt. Die Palette 4 steht auf dem Förderer 1 auf.

Zusätzlich ist im Schrumpfbereich in dem durch die vier Hubstempel 3 umfassten Bereich ein Ventilator 5 unterhalb des Förderers 1 angeordnet, mittels dem Luft nach unten abgesaugt werden kann.

Eine Palette 4 weist vier Außenkanten, nämlich zwei einander gegenüberliegende Stirnkanten 6 und zwei einander gegenüberliegende Längskanten 7 auf, eine oberseitige Auflagefläche 8 für den Gutstapel 2 sowie mehrere unterseitige und im Abstand zueinander unter Bildung von Fußfreiräumen 9 angeordnete und eine unterseitige Standfläche 10 bildende Standfüße 11 auf. Im Bereich ihrer vier Ecken ist jeweils ein Standfuß 11 vorgesehen. Darüber hinaus ist sowohl im Bereich jeder der beiden Längskanten 7 als auch im Bereich jeder der beiden Stirnkanten 6 ein weiterer mittlerer Standfuß 11 vorgesehen. Drei Standfüße 11 stehen insoweit in einer Reihe. Die drei aus jeweils drei Standfü-ßen 11 bestehenden Reihen, die sich parallel zu den beiden Längskanten 7 der Palette 4 erstrecken, weisen unterseitig jeweils ein Bodenbrett 12 auf.

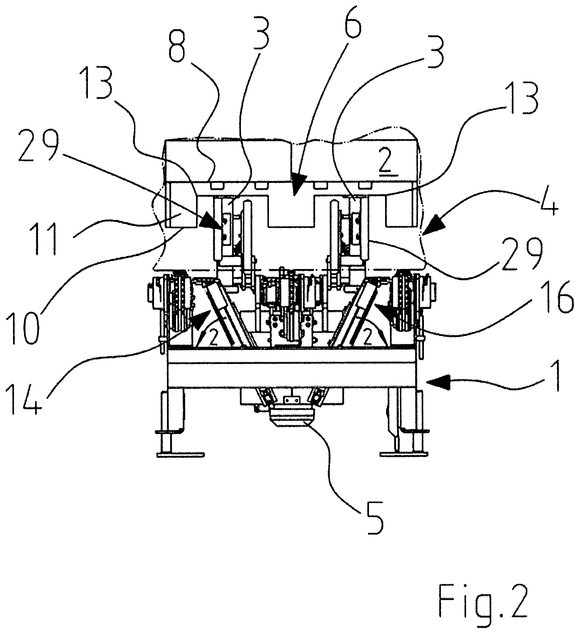

Bei der in Fig. 2 dargestellten Stirnkante 6 der Palette 4 sind zwei viereckige Fußfreiräume 9 erkennbar. Jeder Fußfreiraum 9 weist u. a. einen oberen außenseitigen Eckbereich 13 auf.

Zum Sichern des Gutstapels 2 wird eine Ummantelung 14 verwendet. Die Ummantelung 14 kann beispielsweise als Schrumpfhaube ausgebildet sein, die von oben über den Gutstapel 2 übergezogen wird. Die Ummantelung 14 erstreckt sich im übergezogenen Zustand bis unterhalb die Standfläche 11 der Palette 4.

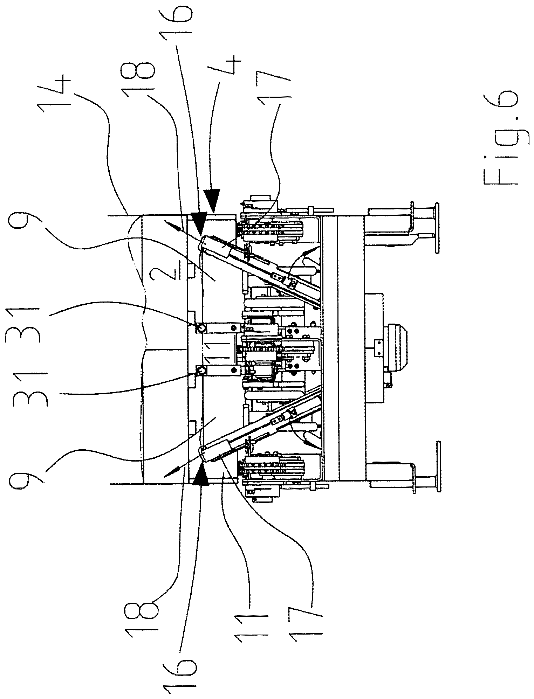

In dem Förderer 1 sind zwei Verlagerungselemente 16 angeordnet, die sich im inaktiven Zustand innerhalb der Kontur des Förderers 1 befinden und sich parallel zu den Längskanten 7 der Palette 4 erstrecken. Jedes Verlagerungselement 16 ist mittels zweier Verlagerungseinrichtungen 17 aus der Kontur des Förderers 1 nach oben verlagerbar. Hierzu wird beispielsweise auf Fig. 6 verwiesen. Darin ist dargestellt, wie jedes der beiden Verlagerungselemente 16 durch die jeweiligen Verlagerungseinrichtungen 17 diagonal nach oben in Richtung des jeweiligen Pfeils 18 in Richtung des oberen außenseitigen Eckbereiches 13 des jeweiligen Fußfreiraumes 9 verlagert werden kann.

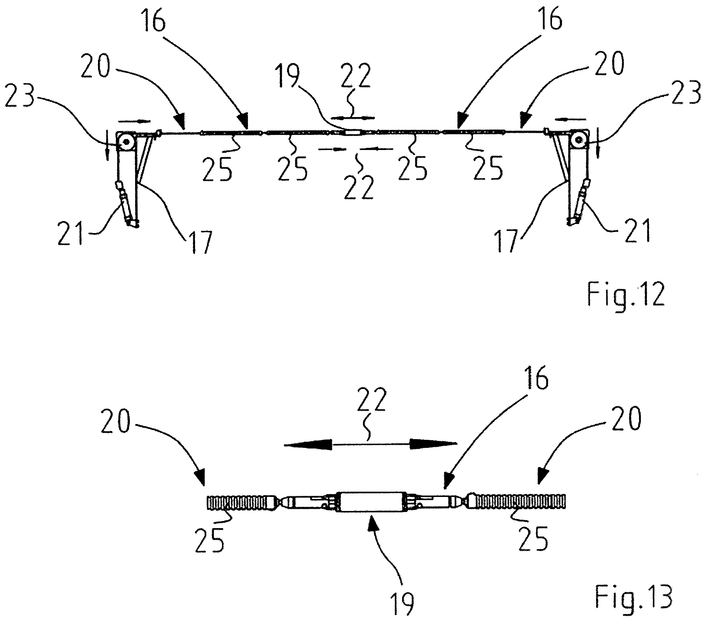

Jedes Verlagerungselement 16 besteht aus einem Draht. Jeder Draht besteht aus zwei durch eine Zugfeder 19 miteinander verbundenen Teilbereichen 20, wobei die beiden Teilbereiche 20 getrennt translatorisch und jeweils in entgegengesetzte Richtungen verlagerbar sind. Hierzu greift an dem freien Ende jedes Teilbereichs 20 ein Aktor 21 an, so dass die Teilbereiche 20, wie in den Fig. 12 und 13 dargestellt, in unterschiedliche Richtungen, was durch den Doppelpfeil 22 bzw. durch die aufeinander zuweisenden Pfeile 22 angedeutet ist, verlagert werden können.

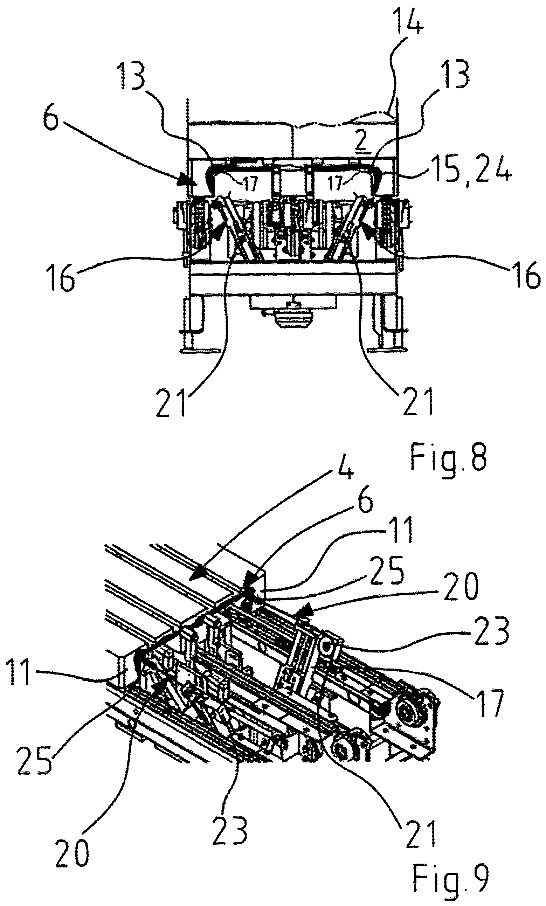

Wie bereits ausgeführt, ist jede Verlagerungseinrichtung 17 als Zylinder ausgebildet, der in einem Winkel α von rund 65° gegenüber der Horizontalen ausgerichtet ist. Jeder Zylinder weist an seinem oberen freien Ende eine Rolle 23 auf, über die der entsprechende Teilbereich 20 des Drahtes geführt ist. Durch die Zugfeder 19 können die beiden Teilbereiche 20 gegeneinander verlagert werden. Durch die Vor- und Zurückbewegung wird der Ummantelungsbereich 15 von unterhalb der Palette 4 nach oben im Bereich der Auflagefläche 8 der Palette 4 verlagert. Auf diese Weise kann der betreffende Ummantelungsbereich 15 als stabile Folienwulst 24 an die Außenkante der Stirnkante 6 der Palette 4 gelegt werden, so wie es in Fig. 8 beispielsweise dargestellt ist.

Jeder der beiden Teilbereiche 20 jedes Verlagerungselementes 16 weist jeweils zwei Hülsen 25 auf, wobei jede Hülse 25 mit Erhebungen 26 versehen ist. Jede Erhebung 26 ist als Zahn ausgebildet, der eine flach angestellte Vorderkante 27 und eine stärker angestellte Rückkante 28 aufweist. Alle Zähne eines Teilbereichs 20 weisen eine einheitliche Ausrichtung auf. Die Vorderkanten 27 der Zähne des einen Teilbereichs 20 sind dem gegenüberliegenden Teilbereich 20 zugewandt.

Das erfindungsgemäße Verfahren gestaltet sich wie folgt:
In Fig. 1 ist die Palette 4 bereits angehoben, da die Ummantelung 14 unterseitig über die Unterseite der Palette 4 vorsteht. Nach dem Anheben der Palette 4 wird der Ventilator 5 aktiviert. Infolgedessen wird Luft nach unten abgesaugt und die Ummantelung 14 unter die Palette 4 gezogen. Dabei verdeckt die Ummantelung 14 mit ihren Ummantelungsbereichen 15 die Fußfreiräume 9. In dieser angehobenen Position erfolgt auch der Unterschrumpf, d. h. das Schrumpfen des Bereichs der Ummantelung 14, der sich unterhalb der Auflagefläche 8 der Palette 4, erstreckt.

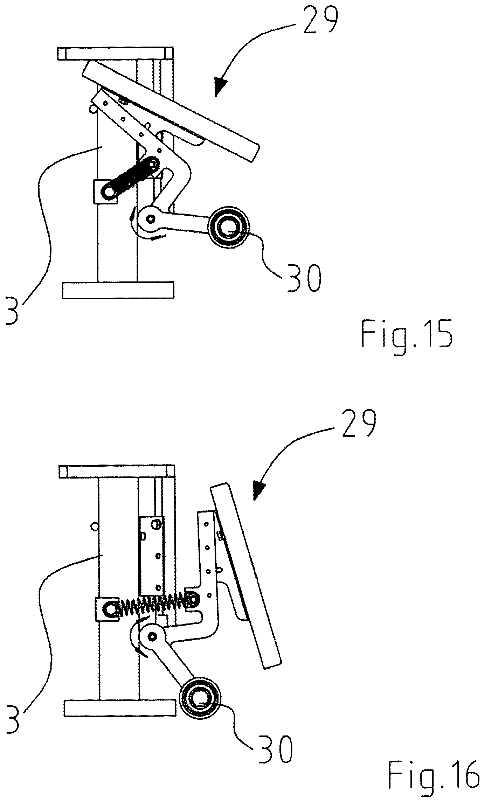

Jeder der vier Hubstempel 3 weist jeweils einen Abstreifer 29 auf, der zwischen zwei Positionen verlagert werden kann. Es bietet sich an, wenn die Fläche eines Abstreifers 29, an der die Ummantelung 14 anliegt, mit einem geeigneten Material, wie Teflon, beschichtet ist, um ein Anhaften der Ummantelung 14 zu verhindern. Die Abstreifer 29 sind so angeordnet, dass sie auf die Stirnkanten 6 der Palette 4 wirken können. In Fig. 16 ist die Beabstandungsposition dargestellt. In dieser Position wird die Ummantelung 14 von der Palette 4 beabstandet. Jedem Abstreifer 29 ist eine Führungsrolle 30 zugeordnet, die beim Anheben und beim Absenken der Hubstempel 3 entlang einer ortsfesten Führung läuft und so eine Verlagerung des jeweiligen Abstreifers 29 bewirkt. Fig. 15 zeigt die Ausrichtung des Abstreifers 29 in seiner Inaktivstellung. In dieser Inaktivstellung befindet sich jeder Abstreifer 29 innerhalb der Kontur der in Fig. 15 nicht dargestellten Palette 4.

Wie in Fig. 3 dargestellt ist, wird die Palette 4 nun abgesetzt und die Abstreifer 29 fahren dabei infolge der Absenkbewegung der Hubstempel 3 in ihre Inaktivstellung zurück. Zusätzlich sind im Bereich jeder Stirnkanten 6 in dem Förderer 1 jeweils zwei Folienhaltevorrichtungen 31 in Form von Schwenkhebeln vorgesehen. Die Schwenkhebel werden nach oben gegen die Palette 4 verschwenkt, so wie es in Fig. 3 dargestellt ist. Hierdurch wird die Ummantelung 14 an der Auflagefläche 8 der Palette 4 fixiert, da das Ende jeder Folienhaltevorrichtung 31 die Ummantelung 14 gegen die Auflagefläche 8 der Palette 4 drückt.

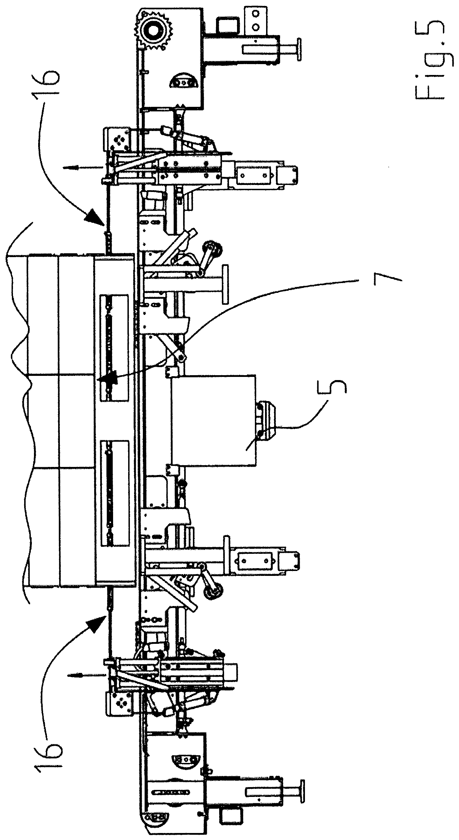

Die Formvorrichtung in Form der beiden Verlagerungselemente 16 kann dann zur Schaffung von Freibereichen in den erwärmten Ummantelungsbereich 15 aus der in Fig. 1 dargestellten Ausgangstellung durch diagonales nach oben Verlagern, so wie es in Fig. 6 durch die Pfeile 18 dargestellt ist, in ihre jeweilige Endstellung verlagert werden. In dieser Stellung befindet sich der Draht im oberen außenseitigen Eckbereich 13 des jeweiligen Fußfreiraumes 9. Dieses Anheben ist durch die beiden Pfeile 18 in den Fig. 5 und 6 dargestellt.

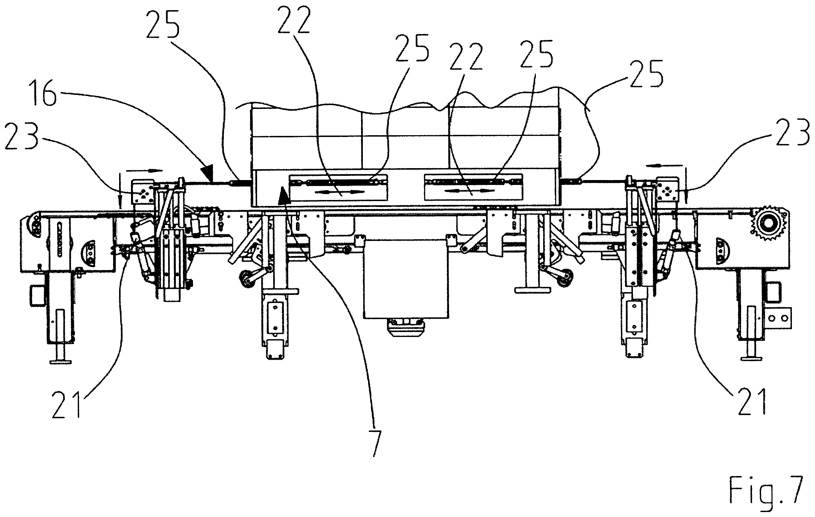

Während des nach oben Verlagerns eines Verlagerungselementes 16 oder auch nachdem das Verlagerungselement 16 den anvisierten Bereich, nämlich den oberseitigen außenseitigen Eckbereich 13 eines Fußfreiraums 9, erreicht hat, können die beiden Teilbereiche 20 jedes Verlagerungselementes 16 getrennt translatorisch und damit in jeweils entgegengesetzte Richtungen verlagert werden. Diese Verlagerung ist durch die Doppelpfeile 22 in Fig. 7 dargestellt. Durch die Vor- und Zurückbewegung wird der betreffende Ummantelungsbereich 15 von unterhalb der Palette 4 nach außen in Höhe der Auflagefläche 8 der Palette 4 verlagert. Auf diese Weise kann eine stabile Folienwulst 24 an der Außenkante der Stirnkante 6 der Palette 4 erzielt werden, so wie sie beispielsweise in Fig. 8 dargestellt ist.

Wie beispielsweise den Fig. 8 und 9 zu entnehmen ist, ist die Folienwulst 24 sicher um den entsprechenden Fußfreiraum 9 herumgelegt, d. h. es ist ein Freibereich in der Ummantelung 14 erzeugt worden. In dem dargestellten Beispiel weist die Ummantelung 14 auch einen Unterschrumpf auf, d. h. es befindet sich auch ein geschrumpfter Teilbereich der Ummantelung 14 unter der Standfläche 11 der Palette 4.

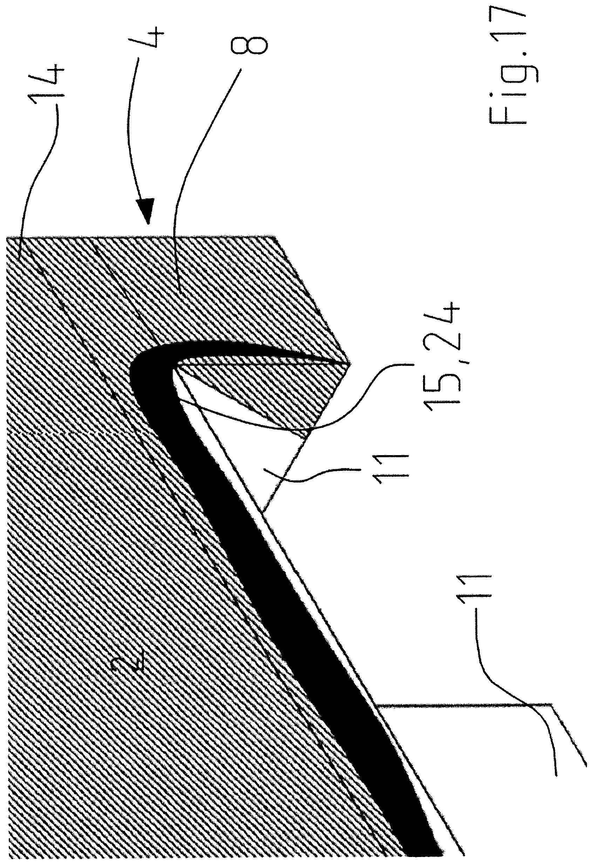

Bei einer solchen Ausgestaltung "umschlingt" die Ummantelung 14 den Standfuß 11, so wie es auch in Fig. 17 dargestellt ist. In Fig. 17 ist der rechte Standfuß 11 dargestellt. Die Ummantelung 14 liegt an den beiden nach außen weisenden Außenflächen des Standfußes 11 und teilweise auch an der Innenseite des Standfußes 11 an, die dem benachbarten, nicht dargestellten Standfuß 11 zugewandt ist. Durch den Unterschrumpf in Kombination mit der "Umschlingung" wird eine besonders hohe Ladungssicherung erzielt, da hohe Vertikalkräfte von der Ummantelung 14 aufgenommen werden können.

Während des Seitenschrumpfes werden die vom Unterschrumpf noch heißen Ummantelungsbereiche 15 ausgeformt. Durch das spätere Abkühlen verfestigt sich jede Folienwulst 24 und die Fußfreiräume 9 sind dauerhaft komplett frei. In dem dargestellten Ausführungsbeispiel erstreckt sich ein Freibereich über beide Fußfreiräume 9 einschließlich des mittleren Standfußes 11. Bei der in den Fig. 8 und 9 dargestellten Ausgestaltung ist die Ummantelung 14 noch durch die beiden als Schwenkhebel ausgebildeten Folienhaltevorrichtungen 31 fixiert.

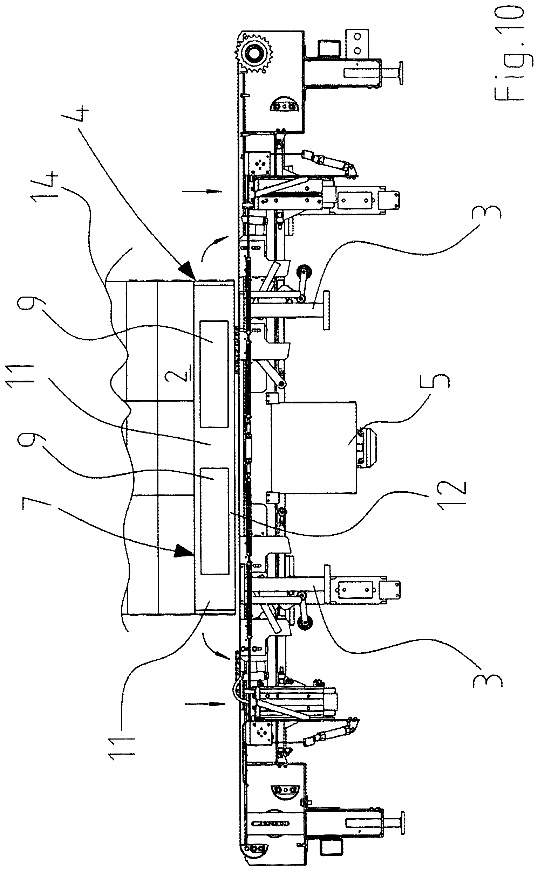

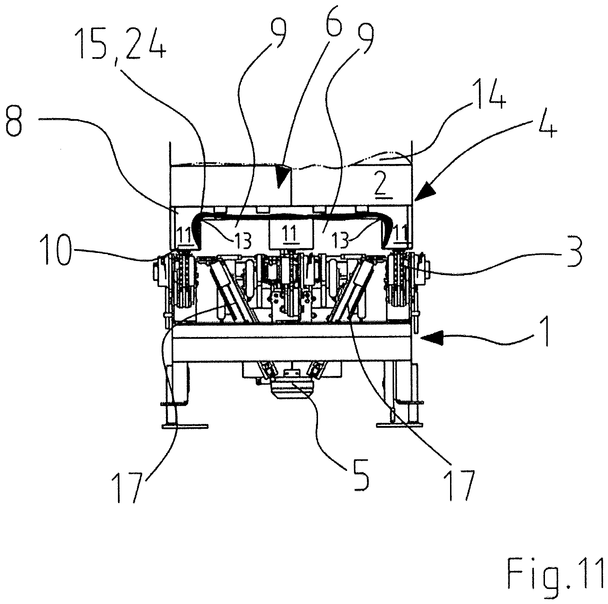

Anschließend schwenken die beiden Schwenkhebel zurück, was in Fig. 10 dargestellt ist. Gleichzeitig werden - wie in Fig. 10 dargestellt - die beiden Verlagerungselemente 16 wieder in ihre ursprüngliche Ausgangssituation, wie sie in Fig. 11 dargestellt ist, zurückverlagert.

Wie in Fig. 11 erkennbar, ist in der Ummantelung 14, die an der Stirnkante 6 der Palette 4 anliegt, ein Freibereich erzielt worden, so dass der betreffende Fußfreiraum 9 vollständig frei von der Ummantelung 14 ist. Durch das Herumlegen ist die Ummantelung 14 nicht beschädigt worden und gewährleistet insoweit eine gute Ladungsstabilität.

Bei den dargestellten Ausführungsbeispielen wird das eine Verlagerungselement 16 in dem linken Fußfreiraum 9 und das andere Verlagerungselement 16 in dem rechten Fußfreiraum verlagert. Damit erstreckt sich der Freibereich über beide Fußfreiräume 9 sowie über den mittleren Standfuß 11.

In dem in den Figuren dargestellten Verfahrensablauf werden beide Verlagerungselemente 16 an ihren insgesamt vier Enden gleichzeitig angehoben. Daher wird gleichzeitig in den gegenüberliegenden Bereichen der zwei einander gegenüberliegenden Stirnkanten 6 jeweils ein viereckiger Freibereich in die Ummantelung 14 eingebracht. Es ist aber auch durchaus möglich, dass die Verlagerungselemente 16 zeitversetzt angehoben werden. Selbstverständlich ist es auch möglich, dass das eine Ende eines Verlagerungselementes 16 und das andere Ende dieses Verlagerungselementes 16 zeitversetzt und/oder in einer anderen Geschwindigkeit angehoben werden.

## Patentansprüche

1. Verfahren zur Schaffung zumindest eines Freibereichs in einer aus Schrumpffolie bestehenden, vorzugsweise als Schrumpfhaube ausgebildeten, Ummantelung (14), welche einen auf einer Palette (4) angeordneten Gutstapel (2) sichert, wobei die Palette (4) vier Außenkanten, nämlich zwei einander gegenüberliegende Stirnkanten (6) und zwei einander gegenüberliegende Längskanten (7), eine oberseitige Auflagefläche (8) für den Gutstapel (2) sowie mehrere unterseitige und im Abstand zueinander unter Bildung von Fußfreiräumen (9) angeordnete, eine unterseitige Standfläche (10) bildende Standfüße (11) aufweist, wobei die Palette (4) im Bereich ihren vier Ecken jeweils einen Standfuß (11) aufweist und vorzugsweise auch zwischen zwei Standfüßen (11) einer Außenkante, vorzugsweise jeder Außenkante, noch zumindest einen weiteren dazwischen angeordneten Standfuß (11) aufweist, wobei jeder Fußfreiraum (9) der Palette (4) viereckig und mit unter anderem einem oberen außenseitigen Eckbereich (13) ausgebildet ist, und wobei die Ummantelung (14) zumindest teilweise die Standfläche (11) der im Bereich der vier Außenkanten der Palette (4) angeordneten Standfüße (11) untergreift und wobei zumindest ein Freibereich in einen Ummantelungsbereich (15), der zwischen zwei Standfüßen (11) einer gemeinsamen Außenkante liegt, eingebracht wird, **dadurch gekennzeichnet, dass** in gegenüberliegenden Bereichen zweier einander gegenüberliegender Außenkanten der Palette (4), vorzugsweise der beiden gegenüberliegenden Stirnkanten (6) der Palette (4), vorzugsweise gleichzeitig, jeweils ein Freibereich mit zwei länglich ausgebildeten Verlagerungselementen (16) erzeugt wird, wobei die Verlagerungselemente (16) zunächst unterhalb der unterseitigen Standflächen (10) der Palette (4) angeordnet sind und wobei jedes Verlagerungselement (16) mit seinen beiden Enden über die jeweilige Au-ßenkante der Palette (4) vorsteht, wobei der Ummantelungsbereich (14) zumindest in den gegenüberliegenden Bereichen, in den jeweils ein Freibereich mittels der zwei Verlagerungselemente (16) erzeugt werden soll, erwärmt wird, wobei jedes der beiden Verlagerungselemente (16) in Richtung des oberen außenseitigen Eckbereichs (13) des jeweiligen Fußfreiraums (9) nach oben verlagert wird und wobei der nach oben verlagerte Ummantelungsbereich (15) in seiner aufwärts verlagerten Position durch Abkühlen in dieser nach oben verlagerten Position fixiert wird.

2. Verfahren nach dem vorhergehenden Anspruch, **dadurch gekennzeichnet, dass** in den gegenüberliegenden Bereichen zweier einander gegenüberliegender Außenkanten der Palette (4) jeweils ein Freibereich zwischen zwei unmittelbar benachbarten Standfüßen (11) erzeugt wird, wobei die Abmessungen des Freibereichs den Abmessungen des Fußfreiraums (9) zwischen diesen beiden unmittelbar benachbarten Standfüßen (11) der betreffenden Außenkante entspricht.

3. Verfahren nach einem der vorhergehenden Ansprüche, **dadurch gekennzeichnet, dass** die Palette (4) in zwei einander gegenüberliegenden Außenkanten zum einen im Bereich der Ecken jeweils einen Standfuß (11) und zum anderen zusätzlich noch zumindest einen weiteren, dazwischen angeordneten Standfuß (11) aufweist und dass ein Freibereich in den Ummantelungsbereich (15), der zwischen zwei nicht unmittelbar benachbarten Standfüßen (11) einer gemeinsamen Außenkante liegt, eingebracht wird.

4. Verfahren nach einem der vorhergehenden Ansprüche, **dadurch gekennzeichnet, dass** als Verlagerungselement (16) ein Seil oder ein Draht verwendet wird.

5. Verfahren nach einem der vorhergehenden Ansprüche, **dadurch gekennzeichnet, dass** zumindest ein Verlagerungselement (16) während der Verlagerung in Richtung (Pfeil 18) des oberen außenseitigen Eckbereichs (13) des jeweiligen Fußfreiraums (9) und/oder nach Abschluss der Verlagerung in Richtung des oberen außenseitigen Eckbereichs (13) des jeweiligen Fußfreiraums (9) translatorisch verlagert wird.

6. Verfahren nach einem der vorhergehenden Ansprüche, **dadurch gekennzeichnet, dass** zumindest ein Verlagerungselement (16) aus zwei durch eine Feder, vorzugsweise eine Zugfeder (19), miteinander verbundenen Teilbereichen (20) besteht, wobei die beiden Teilbereiche (20) getrennt translatorisch, vorzugsweise in jeweils entgegengesetzte Richtungen, verlagert werden.

7. Verfahren nach einem der vorhergehenden Ansprüche, **dadurch gekennzeichnet, dass** zumindest ein Verlagerungselement (16) zumindest in jedem seiner beiden Bereiche, die mit dem Ummantelungsbereich (15) in Kontakt sind, eine raue Oberfläche aufweist und/oder, vorzugsweise zackenförmig ausgebildete, Erhebungen (26) aufweist.

8. Verfahren nach einem der vorhergehenden Ansprüche, **dadurch gekennzeichnet, dass** der Ummantelungsbereich (15), vorzugsweise bevor der Ummantelungsbereich (15) zumindest in den gegenüberliegenden Bereichen, in den jeweils ein Freibereich mittels der zwei Verlagerungselemente (16) erzeugt werden soll, erwärmt wird, seitlich gegen die Palette (4) verlagert, vorzugsweise gesaugt, wird.

9. Verfahren nach einem der vorhergehenden Ansprüche, **dadurch gekennzeichnet, dass** der Ummantelungsbereich (15) zumindest in einem der beiden Bereiche, vorzugsweise in beiden Bereichen, in dem (denen) jeweils ein Freibereich mittels der zwei Verlagerungselemente (16) erzeugt werden soll, erst dann nach oben verlagert wird, wenn das Erwärmen in dem betreffenden Bereich vollständig abgeschlossen ist.

10. Verfahren nach einem der vorhergehenden Ansprüche, **dadurch gekennzeichnet, dass** die Ummantelung (14) zumindest in einem der beiden Bereiche, vorzugsweise in beiden Bereichen, in dem (denen) jeweils ein Freibereich mittels der zwei Verlagerungselemente (16) erzeugt werden soll, vor dem Erwärmen und/oder während des Erwärmens und/oder vor einem eventuellen seitlichen Verlagern des Ummantelungsbereichs (15) gegen die Palette (4), vorzugsweise durch Ansaugen, von der Palette (4) und/oder von dem auf der Palette (4) angeordneten Gutstapel (2) in horizontaler Richtung gesehen beabstandet wird.

11. Verfahren nach einem der vorhergehenden Ansprüche, **dadurch gekennzeichnet, dass** die Ummantelung (14), vorzugsweise vor dem Erwärmen, und/oder vorzugsweise während des Erwärmens, und/oder vorzugsweise während der Verlagerung zumindest eines Verlagerungselementes (16) in Richtung des oberen außenseitigen Eckbereichs (13) des jeweiligen Fußfreiraums (9) in dem Bereich, der sich oberhalb des bereits erwärmten bzw. zu erwärmenden Ummantelungsbereichs (15) befindet, gegenüber der Auflagefläche (8) der Palette (4) fixiert wird.

12. Verfahren nach einem der vorhergehenden Ansprüche, **dadurch gekennzeichnet, dass** die Ummantelung (14) während der Nachobenverlagerung jedes Ummantelungsbereichs (15) im Bereich der beiden einander gegenüberliegenden Außenkanten die Ummantelung (14) und/oder nach Abschluss der Nachobenverlagerung jedes Ummantelungsbereichs (15) im Bereich der beiden einander gegenüberliegenden Außenkanten zumindest in den mit den vier Außenkanten der Palette (4) in Kontakt befindlichen Bereichen, vorzugsweise vollständig, geschrumpft oder ausgeschrumpft wird.

13. Verfahren nach einem der vorhergehenden Ansprüche, **dadurch gekennzeichnet, dass** der vollständige Bereich der Ummantelung (14), der sich unterhalb der Auflagefläche (8) der Palette (4) befindet, erwärmt wird, bevor jedes der beiden Verlagerungselemente (16) in Richtung des oberen außenseitigen Eckbereichs (13) des jeweiligen Fußfreiraums (9) nach oben verlagert wird.

14. Formvorrichtung zur Durchführung eines Verfahrens zur Schaffung zumindest eines Freibereichs in einer aus Schrumpffolie bestehenden, vorzugsweise als Schrumpfhaube ausgebildeten, Ummantelung (14), welche einen auf einer Palette (4) angeordneten Gutstapel (2) sichert, wobei die Palette (4) vier Außenkanten, nämlich zwei einander gegenüberliegende Stirnkanten (6) und zwei einander gegenüberliegende Längskanten (7), eine oberseitige Auflagefläche (8) für den Gutstapel (4) sowie mehrere unterseitige und im Abstand zueinander unter Bildung von Fußfreiräumen (9) angeordnete, eine unterseitige Standfläche (10) bildende Standfüße (11) aufweist, wobei die Palette (4) im Bereich ihrer vier Ecken jeweils einen Standfuß (11) aufweist und vorzugsweise auch zwischen zwei Standfüßen (11) einer Außenkante, vorzugsweise jeder Außenkante, noch zumindest einen weiteren dazwischen angeordneten Standfuß (11) aufweist, wobei jeder Fußfreiraum (9) der Palette (4) viereckig und mit unter anderem einem oberen außenseitigen Eckbereich (13) ausgebildet ist, und wobei die Ummantelung (14) zumindest teilweise die Standfläche (11) der im Bereich der vier Außenkanten der Palette (4) angeordneten Standfüße (11) untergreift und wobei zumindest ein Freibereich in einen Ummantelungsbereich (15), der zwischen zwei Standfüßen (11) einer gemeinsamen Außenkante liegt, eingebracht wird, **dadurch gekennzeichnet, dass,** insbesondere für die Durchführung des Verfahrens nach einem der Ansprüche 1 bis 12, zumindest zwei länglich ausgebildete Verlagerungselemente (16) vorgesehen sind, wobei jedes der beiden Verlagerungselemente (16) zunächst unterhalb der unterseitigen Standfläche (10) der Palette (4) angeordnet ist und wobei jedes Verlagerungselement (16) mit seinen beiden Enden über die jeweilige Außenkante der Palette (4) vorsteht, und wobei jedem der beiden Verlagerungselemente (16) zumindest jeweils eine Verlagerungseinrichtung (17) zugeordnet ist, mittels der das betreffende Verlagerungselement (16) zum nach oben Verlagern des Ummantelungsbereichs in Richtung des oberen außenseitigen Eckbereichs (13) des jeweiligen Fußfreiraums (9) nach oben verlagerbar ist.

15. Formvorrichtung nach dem vorhergehenden Anspruch, **dadurch gekennzeichnet, dass** zumindest ein Verlagerungselement (16) als Seil oder als Draht ausgebildet ist.

16. Formvorrichtung nach einem der Ansprüche 14 bis 15, **dadurch gekennzeichnet, dass** zumindest einem Verlagerungselement (16) zwei Verlagerungseinrichtungen (17) zugeordnet sind.

17. Formvorrichtung nach einem der Ansprüche 14 bis 16, **dadurch gekennzeichnet, dass** zumindest eine Verlagerungseinrichtung (17) als Zylinder ausgebildet ist.

18. Formvorrichtung nach einem der Ansprüche 14 bis 17, **dadurch gekennzeichnet, dass** zumindest eine der beiden Verlagerungseinrichtungen (17), vorzugsweise beide Verlagerungseinrichtungen (17), eines Verlagerungselementes (16) parallel zur Längserstreckung des Verlagerungselementes (16) gesehen verfahrbar angeordnet ist (sind).

19. Formvorrichtung nach einem der Ansprüche 14 bis 18, **dadurch gekennzeichnet, dass** zumindest ein Verlagerungselement (16) translatorisch verlagerbar ist.

20. Formvorrichtung nach einem der Ansprüche 14 bis 19, **dadurch gekennzeichnet, dass** zumindest ein Verlagerungselement (16) aus zwei durch eine Feder, vorzugsweise eine Zugfeder (19), miteinander verbundenen Teilbereichen (20) besteht, wobei die beiden Teilbereiche (20) getrennt translatorisch, vorzugsweise in jeweils entgegengesetzte Richtungen, verlagerbar sind.

21. Formvorrichtung nach einem der Ansprüche 14 bis 20, **dadurch gekennzeichnet, dass** zumindest ein Verlagerungselement (16) in jedem seiner beiden Bereiche, die mit jeweils einem Ummantelungsbereich (15) in Kontakt sind, eine raue Oberfläche aufweist.

22. Formvorrichtung nach einem der Ansprüche 14 bis 21, **dadurch gekennzeichnet, dass** zumindest ein Verlagerungselement (16) in jedem seiner beiden Bereiche, die mit jeweils einem Ummantelungsbereich (15) in Kontakt sind, eine Hülse (25) mit einer rauen Oberfläche und/oder mit, vorzugsweise zackenförmig ausgebildeten, Erhebungen (26) aufweist.

23. Formvorrichtung nach dem vorhergehenden Anspruch, **dadurch gekennzeichnet, dass** jede Erhebung (26) zumindest eines Verlagerungselementes (16) als Zahn ausgebildet ist, der eine flacher angestellte Vorderkante (27) und eine stärker angestellte Rückkante (28) aufweist, wobei alle Zähne eines Teilbereichs (20) eine einheitliche Ausrichtung aufweisen und wobei die Vorderkanten (27) der Zähne des einen Teilbereichs (20) dem gegenüberliegenden Teilbereich (20) zugewandt sind.

## Claims

1. Method for creating at least one free area in a casing (14) made of shrink foil, preferably designed as a shrink hood, which secures a stack of goods (2) arranged on a pallet (4), wherein the pallet (4) comprises four outer edges, namely two mutually opposing face edges (6) and two mutually opposing longitudinal edges (7), on the upper side a contact surface (8) for the stack of goods (2), and on the under side a plurality of standing feet (11) arranged at a distance from one another with the formation of foot clearance spaces (9) and forming an underside standing surface (10), wherein the pallet (4) comprises in each case a standing foot (11) in the region of its four corners, and preferably also comprises, between two standing feet (11) of an outer edge, preferably of each outer edge, and further at least one additional standing foot (11) arranged between them, wherein each foot clearance space (9) of the pallet (4) is configured as quadrilateral and with, among other elements, a top upper side corner region (13), and wherein the casing (14) engages at least partially beneath the standing surface (11) of the standing feet (11) arranged in the region of the four outer edges of the pallet (4), and wherein at least one free area is introduced into a casing region (15) which lies between two standing feet (11) of a common outer edge, **characterised in that** in the mutually opposing areas of two mutually opposing outer edges of the pallet (4), preferably of the two mutually opposing face edges (6) of the pallet (4), preferably at the same time, in each case a free area with two longitudinally formed displacement elements (16) is produced, wherein the displacement elements (16) are initially arranged beneath the underside standing surfaces (10) of the pallet (4), and wherein each displacement element (16) projects with both its end over the respective outer edge of the pallet (4), wherein the casing region (14) is heated at least in the mutually opposed areas in which it is intended that a free area should be created by means of the two displacement elements (16), wherein each of the two displacement elements (16) is displaced upwards in the direction of the upper outside corner area (13) of the respective foot free area (9), and wherein the casing area (15) displaced upwards is fixed in its upwards displaced position by cooling in this upwards displaced position.

2. Method according to the preceding claim, **characterised in that** in the mutually opposed areas of two mutually opposed outer edges of the pallet (4), in each case a free area is produced between two immediately adjacent standing feet (11), wherein the dimensions of the free area correspond to the dimensions of the foot free area (9) between these immediately adjacent standing feet (11) of the outer edge concerned.

3. Method according to any one of the preceding claims, **characterised in that** the pallet (4) comprises, in two mutually opposed outer edges, on the one hand in the area of the corners in each case a standing foot (11) and, on the other, additionally at least one further standing foot (11) arranged between them, and that a free area is introduced into the casing region (15) which lies between two not immediately adjacent standing feet (11) of a common outer edge.

4. Method according to any one of the preceding claims, **characterised in that** a cable or wire is used as the displacement element (16).

5. Method according to any one of the preceding claims, **characterised in that** at least one displacement element (16) is translationally displaced, during the displacement, in the direction (arrow 18) of the upper outside corner area (13) of the respective foot free area (9), and/or after the conclusion of the displacement in the direction of the upper outside corner area (13) of respective foot free area (9).

6. Method according to any one of the preceding claims, **characterised in that** at least one displacement element (16) consists of two part areas (20), connected to one another by a spring, preferably a tension spring (19), wherein the two part areas (20) are displaced translationally, preferably in each case in mutually opposed directions/

7. Method according to any one of the preceding claims, **characterised in that** at least one displacement element (16) exhibits, at least in each of its two areas which are in contact with the casing area (15), a rough surface and/or elevations (26), preferably configured in a serrated pattern.

8. Method according to any one of the preceding claims, **characterised in that,** preferably before the casing area (15) is heated, and at least in the mutually opposed areas in which it is intended that in each case a free area should be produced by means of the two displacement elements (16), the casing area (15) is heated, and moved laterally against the pallet (4), preferably by suction.

9. Method according to any one of the preceding claims, **characterised in that** the casing area (15), at least in one of the two areas and preferably in both areas in which it is intended that a free area should be produced in each case by means of the two displacement elements (16), is only moved upwards when the heating in the area concerned has been entirely completed.

10. Method according to any one of the preceding claims, **characterised in that** the casing (14), at least in one of the two areas and preferably in both areas in which it is intended that a free area should be produced in each case by means of the two displacement elements (16), before the heating and/or during the heating and/or before a possible lateral displacement of the casing area (15) against the pallet (4), preferably by suction, is moved away from the pallet (4) and/or from the stack of goods (2) arranged on the pallet (4), seen in the horizontal direction.

11. Method according to any one of the preceding claims, **characterised in that** the casing (14), preferably before the heating and/or preferably during the heating and/or preferably during the displacement of at least one displacement element (16) in the direction of the upper outside corner area (13) of the respective foot free area (9), in the area located above the already heated or to be heated casing area (15), is fixed opposite the contact surface (8) of the pallet (4).

12. Method according to any one of the preceding claims, **characterised in that,** during the upwards displacement of each casing area (15), in the area of the two mutually opposed outer edges, the casing (14), and/or after the conclusion of the upwards displacement of each casing area (15), in the area of the two mutually opposed outer edges, at least in the areas in contact with the four outer edges of the pallet (4), the casing (14) is shrunk or shrunk out, preferably completely.

13. Method according to any one of the preceding claims, **characterised in that** the entire area of the casing (14) which is located beneath the contact surface (8) of the pallet (4), is heated, before each of the two displacement elements (16) is displaced upwards in the direction of the upper outside corner area (13) of the respective foot free area (9).

14. Shaping device for carrying out a method for producing at least one free area in a casing (14) consisting of a shrink foil, preferably designed as a shrink hood, which secures a stack of goods (2) arranged on a pallet (4), wherein the pallet (4) comprises four outer edges, namely two mutually opposing face edges (6) and two mutually opposing longitudinal edges (7), on the upper side a contact surface (8) for the stack of goods (4), and on the under side a plurality of standing feet (11) arranged at a distance from one another with the formation of foot clearance spaces (9) and forming an underside standing surface (10), wherein the pallet (4) comprises in each case a standing foot (11) in the region of its four corners, and preferably also comprises, between two standing feet (11) of an outer edge, preferably of each outer edge, and further at least one additional standing foot (11) arranged between them, wherein each foot clearance space (9) of the pallet (4) is configured as quadrilateral and with, among other elements, a top upper side corner region (13), and wherein the casing (14) engages at least partially beneath the standing surface (11) of the standing feet (11) arranged in the region of the four outer edges of the pallet (4), and wherein at least one free area is introduced into a casing region (15) which lies between two standing feet (11) of a common outer edge, **characterised in that,** in particular for carrying out the method according to any one of claims 1 to 12, at least two longitudinally configured displacement elements (16) are provided, wherein each of the two displacement elements (16) is initially arranged beneath the underside standing surface (10) of the pallet (4), and wherein each displacement element (16) projects with both its ends over the respective outer edge of the pallet (4), and wherein at least in each case one displacement device (17) is assigned to each of the two displacement elements (16), by means of which the displacement element (16) concerned can be displaced for the upwards displacement of the cover area in the direction of the upper outside corner area (13) of the respective foot free area (9).

15. Shaping device according to the preceding claim, **characterised in that** at least one displacement element (16) is formed as a cable or as a wire.

16. Shaping device according to any one of claims 14 to 15, **characterised in that** two displacement devices (17) are assigned to at least one displacement element (16).

17. Shaping device according to any one of claims 14 to 16, **characterised in that** at least one displacement device (17) is configured as a cylinder.

18. Shaping device according to any one of claims 14 to 17, **characterised in that** at least one of the two displacement devices (17), preferably both displacement devices (17), of a displacement element (16) is (are) arranged as movable, seen parallel to the longitudinal extension of the displacement element (16).

19. Shaping device according to any one of claims 14 to 18, **characterised in that** at least one displacement element (16) can be displaced translationally.

20. Shaping device according to any one of claims 14 to 19, **characterised in that** at least one displacement element (16) consists of two part areas (20), connected to one another by a spring, preferably a tension spring (19), wherein the two part areas (20) can be displaced separately, translationally and preferably in mutually opposed directions.

21. Shaping device according to any one of claims 14 to 20, **characterised in that** at least one displacement (16) comprises a rough surface in each of its two areas which are in contact in each case with a casing area (15).

22. Shaping device according to any one of claims 14 to 21, **characterised in that** at least one displacement element (16) comprises, in each of its two areas which are in contact in each case with a casing area (15), a sleeve (25) with a rough surface and/or with elevations (26), preferably formed in a serrated pattern.

23. Shaping device according to the preceding claim, **characterised in that** each elevation (26) at least of each displacement element (16) is formed as a tooth, which comprises a flatter configured front edge (27) and a more steeply configured rear edge (28), wherein all the teeth of a part area (20) exhibit a uniform orientation, and wherein the front edges (27) of the teeth of the one part area (20) face towards the opposing part area (20).

## Revendications

1. Procédé de création d'au moins une zone dégagée dans un revêtement enveloppant (14) constitué d'un film rétractable, préférentiellement conçu en tant que housse rétractable et sécurisant une pile de marchandises (2) disposée sur une palette (4), laquelle palette (4) comprend quatre arêtes extérieures, à savoir deux arêtes extrêmes (6) pointant à l'opposé l'une de l'autre et deux arêtes longitudinales (7) pointant à l'opposé l'une de l'autre, une surface supérieure d'appui (8) dédiée à la pile de marchandises (2), ainsi que plusieurs piètements inférieurs de support (11) qui sont placés à distance les uns des autres en réservant des espaces libres (9) entre lesdits piètements, et matérialisent une surface inférieure d'assise (10), sachant que ladite palette (4) est pourvue d'un piètement respectif de support (11) dans la région de ses quatre coins et également, de préférence, d'encore au moins un piètement additionnel de support (11) occupant, de préférence, une position intercalaire entre deux piètements de support (11) d'une arête extérieure, préférentiellement de chaque arête extérieure, chaque espace libre (9) entre piètements de la palette (4) étant de configuration rectangulaire présentant, entre autres, une zone d'angle (13) supérieure extérieure, et sachant que le revêtement enveloppant (14) emprisonne par-dessous, au moins en partie, la surface d'assise (11) des piètements de support (11) situés dans la région des quatre arêtes extérieures de ladite palette (4), au moins une zone dégagée étant opérée dans une région (15) dudit revêtement enveloppant interposée entre deux piètements de support (11) d'une arête extérieure commune, **caractérisé par le fait qu'**une zone dégagée respective comportant deux éléments de déplacement (16) de conception allongée est créée, préférentiellement de manière simultanée, dans des régions pointant à l'opposé sur deux arêtes extérieures de la palette (4) pointant à l'opposé l'une de l'autre, de préférence sur les deux arêtes extrêmes (6) de ladite palette (4) qui pointent à l'opposé, lesdits éléments de déplacement (16) étant implantés, dans un premier temps, au-dessous des surfaces inférieures d'assise (10) de la palette (4), et chaque élément de déplacement (16) faisant saillie, par ses deux extrémités, au-delà de l'arête extérieure respective de ladite palette (4), sachant que la région (14) du revêtement enveloppant est chauffée au moins dans les régions, pointant à l'opposé, dans lesquelles une zone dégagée doit être créée, à chaque fois, au moyen des deux éléments de déplacement (16), sachant que chacun desdits deux éléments de déplacement (16) est décalé vers le haut en direction de la zone d'angle (13) supérieure extérieure de l'espace libre respectif (9) entre piètements, et sachant que la région (15) du revêtement enveloppant qui est décalée vers le haut est consignée à demeure, à son emplacement de décalage ascendant, par refroidissement à cet emplacement décalé vers le haut.

2. Procédé selon la revendication précédente, **caractérisé par le fait qu'**une zone dégagée est créée à chaque fois entre deux piètements de support (11) directement voisins dans les régions, pointant à l'opposé, de deux arêtes extérieures de la palette (4) qui pointent à l'opposé l'une de l'autre, les dimensions de ladite zone dégagée correspondant alors aux dimensions de l'espace libre (9) entre ces deux piètements de support (11) directement voisins sur l'arête extérieure concernée.

3. Procédé selon l'une des revendications précédentes, **caractérisé par le fait que**, dans deux arêtes extérieures pointant à l'opposé l'une de l'autre, la palette (4) est munie, d'une part, d'un piètement de support respectif (11) dans la région des coins et additionnellement, d'autre part, d'au moins un autre piètement de support (11) occupant une position intercalaire ; et **par le fait qu'**une zone dégagée est opérée dans la région (15) du revêtement enveloppant interposée entre deux piètements de support (11) d'une arête extérieure commune qui ne sont pas directement voisins.

4. Procédé selon l'une des revendications précédentes, **caractérisé par le fait qu'**un câble ou un fil métallique est utilisé en tant qu'élément de déplacement (16).

5. Procédé selon l'une des revendications précédentes, **caractérisé par le fait qu'**au moins un élément de déplacement (16) est animé d'un décalage translatoire au cours du décalage en direction (flèche 18) de la zone d'angle (13) supérieure extérieure de l'espace libre respectif (9) entre piètements, et/ou à l'achèvement dudit décalage en direction de ladite zone d'angle (13) supérieure extérieure dudit espace libre respectif (9) entre piètements.

6. Procédé selon l'une des revendications précédentes, **caractérisé par le fait qu'**au moins un élément de déplacement (16) est constitué de deux régions partielles (20) reliées l'une à l'autre par l'intermédiaire d'un ressort, préférentiellement d'un ressort de traction (19), lesquelles deux régions partielles (20) sont animées séparément d'un décalage translatoire s'opérant, de préférence, dans des directions respectivement opposées.

7. Procédé selon l'une des revendications précédentes, **caractérisé par le fait qu'**au moins dans chacune de ses deux régions en contact avec la région (15) du revêtement enveloppant, au moins un élément de déplacement (16) présente une surface rugueuse et/ou est muni de protubérances (26) réalisées, de préférence, en forme de dentelures.

8. Procédé selon l'une des revendications précédentes, **caractérisé par le fait que** la région (15) du revêtement enveloppant est décalée latéralement contre la palette (4), de préférence aspirée, préférentiellement avant que ladite région (15) du revêtement enveloppant soit chauffée au moins dans les régions, pointant à l'opposé, dans lesquelles une zone dégagée est destinée à être créée, à chaque fois, au moyen des deux éléments de déplacement (16).

9. Procédé selon l'une des revendications précédentes, **caractérisé par le fait qu'**au moins dans l'une des deux régions, de préférence dans les deux régions dans laquelle (lesquelles) une zone dégagée est destinée à être créée, à chaque fois, au moyen des deux éléments de déplacement (16), la région (15) du revêtement enveloppant est tout d'abord décalée vers le haut lorsque le chauffage dans la région concernée est totalement achevé.

10. Procédé selon l'une des revendications précédentes, **caractérisé par le fait qu'**au moins dans l'une des deux régions, de préférence dans les deux régions dans laquelle (lesquelles) une zone dégagée est destinée à être créée, à chaque fois, au moyen des deux éléments de déplacement (16), le revêtement enveloppant (14) est relégué horizontalement à distance de la palette (4), et/ou de la pile de marchandises (2) disposée sur ladite palette (4), préalablement au chauffage et/ou au cours du chauffage et/ou avant un éventuel décalage latéral de la région (15) dudit revêtement enveloppant contre ladite palette (4), de préférence par aspiration.

11. Procédé selon l'une des revendications précédentes, **caractérisé par le fait que** le revêtement enveloppant (14) est consigné à demeure, par rapport à la surface d'appui (8) de la palette (4), de préférence préalablement au chauffage et/ou de préférence au cours du chauffage et/ou de préférence au cours du décalage d'au moins un élément de déplacement (16) en direction de la zone d'angle (13) supérieure extérieure de l'espace libre respectif (9) entre piètements, dans la région située au-dessus de la région (15) dudit revêtement enveloppant qui est déjà chauffée, ou doit respectivement être chauffée.

12. Procédé selon l'une des revendications précédentes, **caractérisé par le fait que** le revêtement enveloppant (14) est rétracté ou contracté de préférence intégralement, au moins dans les régions en contact avec les quatre arêtes extérieures de la palette (4), au cours du décalage vers le haut de chaque région (15) dudit revêtement enveloppant, dans la région des deux arêtes extérieures pointant à l'opposé l'une de l'autre et/ou à l'achèvement du décalage vers le haut de chaque région (15) dudit revêtement enveloppant, dans la région des deux arêtes extérieures pointant à l'opposé l'une de l'autre.

13. Procédé selon l'une des revendications précédentes, **caractérisé par le fait que** l'intégralité de la région du revêtement enveloppant (14), située au-dessous de la surface d'appui (8) de la palette (4), est chauffée avant que chacun des deux éléments de déplacement (16) soit décalé vers le haut en direction de la zone d'angle (13) supérieure extérieure de l'espace libre respectif (9) entre piètements.

14. Dispositif de formage dévolu à la mise en oeuvre d'un procédé de création d'au moins une zone dégagée dans un revêtement enveloppant (14) constitué d'un film rétractable, préférentiellement conçu en tant que housse rétractable et sécurisant une pile de marchandises (2) disposée sur une palette (4), laquelle palette (4) comprend quatre arêtes extérieures, à savoir deux arêtes extrêmes (6) pointant à l'opposé l'une de l'autre et deux arêtes longitudinales (7) pointant à l'opposé l'une de l'autre, une surface supérieure d'appui (8) dédiée à la pile de marchandises (4), ainsi que plusieurs piètements inférieurs de support (11) qui sont placés à distance les uns des autres en réservant des espaces libres (9) entre lesdits piètements, et matérialisent une surface inférieure d'assise (10), sachant que ladite palette (4) est pourvue d'un piètement respectif de support (11) dans la région de ses quatre coins et également, de préférence, d'encore au moins un piètement additionnel de support (11) occupant, de préférence, une position intercalaire entre deux piètements de support (11) d'une arête extérieure, préférentiellement de chaque arête extérieure, chaque espace libre (9) entre piètements de la palette (4) étant de configuration rectangulaire présentant, entre autres, une zone d'angle (13) supérieure extérieure, et sachant que le revêtement enveloppant (14) emprisonne par-dessous, au moins en partie, la surface d'assise (11) des piètements de support (11) situés dans la région des quatre arêtes extérieures de ladite palette (4), au moins une zone dégagée étant opérée dans une région (15) dudit revêtement enveloppant interposée entre deux piètements de support (11) d'une arête extérieure commune, **caractérisé par le fait qu'**au moins deux éléments de déplacement (16), de conception allongée, sont notamment prévus pour la mise en oeuvre du procédé conforme à l'une des revendications 1 à 12, chacun des deux éléments de déplacement (16) étant implanté, dans un premier temps, au-dessous de la surface inférieure d'assise (10) de la palette (4), et chaque élément de déplacement (16) faisant saillie, par ses deux extrémités, au-delà de l'arête extérieure respective de ladite palette (4), sachant qu'au moins un système respectif de décalage (17) est associé à chacun desdits deux éléments de déplacement (16), système au moyen duquel l'élément de déplacement (16) concerné peut être décalé vers le haut en vue de provoquer un décalage ascendant de la région du revêtement enveloppant, en direction de la zone d'angle (13) supérieure extérieure de l'espace libre respectif (9) entre piètements.

15. Dispositif de formage selon la revendication précédente, **caractérisé par le fait qu'**au moins un élément de déplacement (16) est réalisé sous la forme d'un câble ou d'un fil métallique.

16. Dispositif de formage selon l'une des revendications 14 à 15, **caractérisé par le fait que** deux systèmes de décalage (17) sont associés à au moins un élément de déplacement (16).

17. Dispositif de formage selon l'une des revendications 14 à 16, **caractérisé par le fait qu'**au moins un système de décalage (17) est réalisé sous la forme d'un cylindre.

18. Dispositif de formage selon l'une des revendications 14 à 17, **caractérisé par le fait qu'**au moins l'un des deux systèmes de décalage (17), de préférence les deux systèmes de décalage (17) d'un élément de déplacement (16), est (sont) agencé(s) avec faculté de mouvement parallèlement à l'étendue longitudinale dudit élément de déplacement (16).

19. Dispositif de formage selon l'une des revendications 14 à 18, **caractérisé par le fait qu'**au moins un élément de déplacement (16) peut être animé d'un décalage translatoire.

20. Dispositif de formage selon l'une des revendications 14 à 19, **caractérisé par le fait qu'**au moins un élément de déplacement (16) est constitué de deux régions partielles (20) reliées l'une à l'autre par l'intermédiaire d'un ressort, préférentiellement d'un ressort de traction (19), lesquelles deux régions partielles (20) sont animées séparément d'un décalage translatoire s'opérant, de préférence, dans des directions respectivement opposées.

21. Dispositif de formage selon l'une des revendications 14 à 20, **caractérisé par le fait qu'**au moins un élément de déplacement (16) est muni d'une surface rugueuse dans chacune de ses deux régions qui sont en contact avec une région respective (15) du revêtement enveloppant.

22. Dispositif de formage selon l'une des revendications 14 à 21, **caractérisé par le fait qu'**au moins un élément de déplacement (16) est nanti, dans chacune de ses deux régions en contact avec une région respective (15) du revêtement enveloppant, d'un fourreau (25) présentant une surface rugueuse et/ou des protubérances (26) réalisées, de préférence, en forme de dentelures.

23. Dispositif de formage selon la revendication précédente, **caractérisé par le fait que** chaque protubérance (26) d'au moins un élément de déplacement (16) est réalisée sous la forme d'une dent comprenant une arête antérieure (27) à profilage aplati et une arête postérieure (28) à profilage plus accentué, sachant que toutes les dents d'une région partielle (20) présentent une orientation unitaire, et sachant que les arêtes antérieures (27) des dents de l'une (20) des régions partielles sont tournées vers la région partielle (20) qui pointe à l'opposé.
